(19) Europäisches Patentamt
European Patent Office
Office européen des brevets

(11) **EP 1 956 471 B1**

(12) **EUROPEAN PATENT SPECIFICATION**

(45) Date of publication and mention
of the grant of the patent:
**01.12.2010 Bulletin 2010/48**

(21) Application number: **06833403.6**

(22) Date of filing: **27.11.2006**

(51) Int Cl.:
**G06F 3/048** *(2006.01)*    **G06T 15/40** *(2006.01)*
**G06T 17/40** *(2006.01)*

(86) International application number:
**PCT/JP2006/323599**

(87) International publication number:
**WO 2007/063805 (07.06.2007 Gazette 2007/23)**

(54) **OBJECT SELECTING DEVICE, OBJECT SELECTING METHOD, INFORMATION RECORDING MEDIUM, AND PROGRAM**

OBJEKTAUSWAHLEINRICHTUNG, OBJEKTAUSWAHLVERFAHREN, INFORMATIONSAUFZEICHNUNGSMEDIUM UND PROGRAMM

DISPOSITIF DE SELECTION D OBJET, PROCEDE DE SELECTION D OBJET, SUPPORT D ENREGISTREMENT DES INFORMATIONS ET PROGRAMME

(84) Designated Contracting States:
**DE FR GB**

(30) Priority: **29.11.2005 JP 2005343317**

(43) Date of publication of application:
**13.08.2008 Bulletin 2008/33**

(73) Proprietor: **Konami Digital Entertainment Co., Ltd.**
**Tokyo 107-8324 (JP)**

(72) Inventor: **KAWABATA, Yasuhiro**
**Tokyo 1078324 (JP)**

(74) Representative: **Rüger, Barthelt & Abel**
**Patentanwälte**
**Webergasse 3**
**73728 Esslingen (DE)**

(56) References cited:
**EP-A- 0 738 952**    **JP-A- 01 150 981**
**JP-A- 09 081 784**    **JP-A- 63 052 266**
**JP-A- 2002 042 172**    **US-B1- 6 384 841**

## Description

Technical Field

The present invention relates to an object selecting device and object selecting method for allowing easy selection of objects displayed in a predetermined order, and a computer-readable information recording medium on which is stored a program for realizing these on a computer, as well as the program.

Background Art

Conventionally, computer graphics techniques have been proposed which display various types of objects arranged in a virtual space. Such a technique is disclosed in, for example, the following literature.

Patent Literature 1: Japanese Patent No. 3497860.

Such computer graphic techniques envision viewpoints and projection planes in the virtual space. A projection plane is disposed at a predetermined distance from a viewpoint, and the orientation of a visual axis is defined by a vertical line down from the viewpoint to the projection plane. Rendering is performed using perspective projection in which a position where a ray from a viewpoint to an object crosses a projection plane is associated with a display position of the object.

In this rendering, it is common to draw objects on a frame buffer that corresponds to the projection plane, in order of distance from the viewpoint, using information, in which objects are sorted by distance from the viewpoint to each object (the area in which this information is stored is called a "Z buffer") to thereby draw a closer object so that it hides a further object.

The ray extending from the viewpoint is projected onto a point in the projection plane, and a surface of a conical/pyramid body (a circular cone or a pyramid, etc.) with the viewpoint as its apex is projected onto the boundary lines of a shape (a circle, an ellipse, sides of a polygon, etc.) corresponding to the bottom face of the conical/pyramid body in the projection plane.

Conventionally, when selecting one of several objects disposed in a virtual space, a technique has been used in which a cursor is displayed on a screen which moves from object to object in a predetermined order by pressing a movement button, and then pressing a designation button when the desired object is reached..

However, with this technique, the order in which the cursor moves differs at times from that envisioned by the user, and since in this case the user's selection is no longer intuitive, selection of objects becomes cumbersome, sometimes causing mistakes.

EP 0738 952 A2 discloses a method and apparatus for selecting an edit object displayed on a display screen, which are considered as the next prior art and have the features of the preamble of independent claims 1, 7, 8 and 9, respectively. To simplify the selection process, edit objects existing at a particular pointer position specified by a user using a pointing device or in a predetermined region based on the specified pointer position are selected as selective candidates and a subscreen is displayed with information regions corresponding to the selective candidates so that the user can make a selection directly from this subscreen using the pointing device.

US 6 384 841 B1 discloses a similar method for selecting a desired one of a plurality of objects displayed on a visual display, which is applicable to a three-dimensional virtual reality environment, wherein the user controls a cursor to select overlapping or hidden objects that the user "sees" in the virtual three-dimensional space. In case of a plurality of selectable objects which are overlapping each other or in close proximity to one another the user is given a listing of all the objects within the selection range of the cursor for selection by the user, thereby enabling isolation of a particular object desired by the user.

DISCLOSURE OF INVENTION

Problems to be Solved by the Invention

Accordingly, there is a strong desire for a technique which allows the user to easily select one of several objects disposed in a virtual space.

The present invention solves this problem, and has as its object to provide an object selecting device and object selecting method for allowing easy selection of objects displayed in a predetermined order, and a computer-readable information recording medium on which is stored a program for realizing these on a computer, as well as the program.

Means for Solving the Problems

To achieve the above objective, the present invention has the features as claimed in independent claims 1, 7, 8 and 9, respectively. Further embodiments of present invention are subject-matter of dependent claims.

In the following the present invention will be disclosed according to the principle of the present invention.

An object selecting device according to a first aspect of the present invention comprises a display unit, a position specifying input receiving unit, and an output unit, which are configured as follows.

First, the display unit displays objects on a screen ordered in a predetermined order, and, in a case in which an object further forward in the order is displayed overlapping with an object further back in the order, displays the object further forward so as to hide the object further back.

When using three-dimensional computer graphics, the predetermined order could be an order of distance from a viewpoint disposed in a virtual space to an object, starting with the closest object. When handling objects in two dimensions, a relationship of what hiding what (i.e., what is displayed in front) when displaying sprites can be applied.

On the other hand, the position specifying input receiving unit receives a position specifying input for specifying a position in the screen.

Many methods can be applied as a method for specifying a position, such as a method in which a desired position on a screen is tapped with a pen or finger, etc., using a touch panel, or a method for designating a position with a click or a designation button after moving a cursor displayed on a screen using a mouse, a keyboard, or direction keys, etc.

Further, among objects displayed on the screen, the output unit outputs, (a) as a selection result, an object further forward in the order displayed at the position if there is an object displayed at the position specified by the position specifying input, and (b) as a selection result, an object furthest forward in the order of objects displayed at the position if there is no object displayed at the position specified by the position specifying input but there is an object displayed at a position overlapping a two-dimensional area set to overlap the position.

In other words, if an object is displayed at a position specified on the screen, that object (which is the frontmost, and if there are objects behind it, displayed so as to hide those objects) is selected as the selection result; otherwise, that object which is the frontmost among objects displayed overlapping a two-dimensional area set so as to surround the position is output as the selection result.

As the two-dimensional area, a circle, a rectangle, a square, or another fixed-shape figure in which the specified position is at the center may be used, as may embodiments discussed below.

With the present invention, the user can easily select objects displayed in a predetermined order.

Further, with the object selecting device, the objects are objects disposed in a virtual space, and objects further forward in the order are closer to the viewpoint disposed in the virtual space than further objects in the order, and can be configured as follows.

When displaying objects on a screen, a common three-dimensional computer graphics technique can be used. In other words, using a Z buffer method, an image buffer is drawn to, starting with further objects, drawing further and closer objects such that they hide each other.

On the other hand, the output unit determines a direction of a ray disposed in the virtual space and extending out from the viewpoint, using the position specified by the position specifying input.

The ray is used as an indicator for selecting objects, and the ray is expressed as a dot in the screen.

Further, among objects disposed in the virtual space, the output unit outputs (a) as a selection result, an object closest to the viewpoint of objects intersected by the ray, if there is an object which the ray intersects, and (b) as a selection result, an object closest to the viewpoint of objects intersected by a three-dimensional area, if there is no object intersected by the ray, and there is an object intersected by a three-dimensional area that is set so as to include the ray, and an whose corresponding area on the screen is the two-dimensional area.

In other words, (a) functions as, for example, "crosshairs" in a gun shooting game, selecting an object first intersected by the ray extending from the viewpoint.

On the other hand, (b) is used when no object exists in the "crosshairs," but, if there is an object intersected by the three-dimensional area around the ray, selects the object of those which is closest to the viewpoint. Moreover, this three-dimensional area is associated with the two-dimensional area described above, and it is typical to use a three-dimensional area whereby when the three-dimensional area is displayed on the screen, the range displayed would be the two-dimensional area discussed above.

Moreover, if there is no object that satisfies these conditions, it is typical for no object to be the selection result.

With the present invention, objects can be selected in accordance with human intuition, as the vagueness of when a human points at something can be expressed by disposing a ray in a virtual space and considering whether or not an object is displayed overlapping an area including a drawing tip of the ray.

Further, the object selecting device of the present invention can be configured as follows.

Namely, the three-dimensional area is a conical/pyramid body, whose apex is the viewpoint, which includes the ray, and whose position with respect to the ray is fixed, and the display unit further draws on the screen an image wherein the ray and the conical/pyramid body are seen from the viewpoint.

In other words, the area where a pyramid, a circular cone, or other conical/pyramid body is projected onto is used as the two-dimensional area for judging whether or not an object is displayed overlapping.

With the present invention, objects can be selected in accordance with human intuition, as the vagueness of when a human points at something can be expressed by disposing a ray and a conical/pyramid body in a virtual space and considering whether or not these intersect an object.

Further, the object selecting device of the present invention further comprises a range rank storage unit, and can be constituted as follows.

Namely, the range rank storage unit stores in association with each other an object disposed in the virtual space, a range within the screen on which the object is displayed, and a rank of the closeness of the object and the viewpoint.

Since the virtual space is a three-dimensional space and the screen displayed is a two-dimensional space, the area in which objects are displayed is a two-dimensional space. Accordingly, the range rank storage stores areas occupied by objects in the screen, and when objects hide each other, the object closest to the viewpoint occupies an overlapping area. Moreover, it is possible to adopt as a rank of closeness of object to viewpoint, for example, a position of objects in the Z buffer (an index of alignment, etc.).

On the other hand, of objects disposed in the virtual space, the output unit outputs (a) as a selection result, an object stored in the range rank storage unit in association with an area including the position on which the ray is displayed in the screen, if a range including the position at which the ray is displayed on the screen is stored in the range rank storage unit, and (b) as a selection result, an object stored as that whose rank of closeness from object to viewpoint is closest, of objects stored in the range rank storage unit in association with a range intersecting a range in which the conical/pyramid body is displayed on the screen, if a range including a position at which the ray is displayed on the screen is not stored in the range rank storage unit and a range intersecting with the range in which the conical/pyramid body is displayed on the screen is stored in the range rank storage unit.

As discussed above, if objects are in such a relationship as to hide each other on the screen displayed, the area of overlap is occupied by the object closest to the viewpoint. Accordingly, in the present invention, which object to be used as the selection result is determined by referencing information stored in the range rank storage unit.

With the present invention, the object which is the selection result can be determined easily by referencing information relating to the area in which the object is displayed on the screen, rather than deriving an intersection point between a ray or a conical/pyramid body and an object using three-dimensional computation in the virtual space.

Further, in the object selecting device of the present invention, the range rank storage unit can be configured such that the range rank storage unit is an image buffer, and objects are stored in association with the range in which they are displayed on the screen and the rank of their closeness to the viewpoint, as the display unit draws the objects disposed in the virtual space to the image buffer, using the rank of their closeness to the viewpoint as a pixel value, starting with objects farthest from the viewpoint.

In computer graphics, using image buffers to store images which are not necessarily displayed immediately, such as with double buffering technology, for example, is common. Ordinarily, when an object is drawn on such an image buffer, an appropriate conversion is performed on the texture of the polygons constituting the external shape of the object (changing the brightness, color saturation, granularity, and size of the texture according to the distance from the light source or viewpoint and the angle in relation to the light source or viewpoint), but with the present invention, the rank of the closeness of such undisplayed objects which are "drawn" on the image buffer to the viewpoint as a "pixel value" is used.

Thereby, by deriving a position at which a ray is to be drawn in the undisplayed image buffer and looking at the pixel value already drawn to that position, it is possible to find out which object intersects with the ray.

Further, by deriving a position to which a ray is to be drawn in the undisplayed image buffer and looking at the smallest pixel value of the pixels included in the area (the rank of the object closest to the viewpoint), it is possible to find out which object intersects with the conical/pyramid body.

The present invention relates to the above-described preferred embodiment of the present invention, and with the present invention, a judgment can easily be made as to whether or not a ray or a conical/pyramid body intersects with an object, by drawing an object to an undisplayed image buffer.

Further, in the object selecting device of the present invention, the output unit may be configured so as to judge an intersection of the object with the ray or an intersection of the object with the conical/pyramid body based on the angle forme by a direction vector of the ray and the position vector of the object with respect to the viewpoint.

With the above invention, the intersection of an object with a ray or a conical/pyramid body was judged by managing information of rank of the closeness between the viewpoint and the area to which the object is drawn, but with the present invention, the judgment is made using computation to find the relationship of intersections of figures disposed in a three-dimensional space.

With the present invention, it is possible to save RAM and other storage areas and process with little memory, as it is possible to judge the intersection of an object and a ray or a conical/pyramid body without using a storage area such as the range rank storage unit.

Further, the object selecting device of the present invention can be configured so as to comprise a direction specifying input receiving unit and a direction changing unit functioning as the position specifying input receiving unit.

Here, the direction specifying input receiving unit receives an input of a direction specifying input for specifying a direction of the ray within the virtual space.

The direction specifying input is given, for example, by being input using a cursor key or an arrow key, etc., and moving a position of the ray (in actuality a "dot") displayed to the screen up, down, left, and right. Other than this, a specifying input such as one which moves the viewpoint within the virtual space, always matching the ray with a vertical line dropping from the viewpoint to the projection plane (this vertical line is the central direction of the visual field, or in other words, the line of sight) can be adopted as the direction specifying input.

On the other hand, the direction changing unit changes the direction of the conical/pyramid body by changing the direction of the ray to a direction specified by the direction specifying input received.

The direction of the conical/pyramid body changes the same amount if the direction of the ray is changed, since the mutual positional relationship between the ray and the conical/pyramid body is fixed, as described above.

Further, the output unit uses the direction changed by the direction changing unit as the direction of the ray disposed in the virtual space and extending out from the viewpoint.

With the present invention, it is possible to contribute to intuitive object selection, since it is possible to move the ray and the conical/pyramid body within the virtual space by moving a "dot" within the screen according to specifying input from the user.

Further, with the object selecting device of the present invention, an object output by the output unit as a selection result can be configured such that the distance from the viewpoint is less than or equal to a predetermined threshold value.

In other words, an object which is very far away can be made not to be selected, even if the object is an object which intersects with the ray or the conical/pyramid body.

According to the present invention, object selection is possible which is in line with the user's intuition, since objects which are hard to see by the user and are unlikely to be selected can never be the selection result, as it is possible to select only objects which are relatively close to the user's viewpoint.

An object selecting method according to another aspect of the present invention is executed by the object selecting device comprising the display unit, the position specifying input receiving unit, and the output unit and comprises a display step, a position specifying input receiving step, and an output step, and which are configured as follows.

In other words, at the display step, the display unit displays objects on a screen ordered in a predetermined order, and, in a case in which an object further forward in the order is displayed overlapping with an object further back in the order, displays the object further forward in the order so as to hide the object further back in the order.

On the other hand, at the position specifying input receiving step, the position specifying input receiving unit receives a position specifying input for specifying a position on the screen.

Further, at the output step, among objects displayed on the screen, the output unit outputs (a) as a selection result, an object further forward in the order of objects displayed to the position if there is an object displayed at the position specified by the position specifying input, and (b) as a selection result, an object closest in the order of objects displayed at the position if there is no object displayed at the position specified by the position specifying input but there is an object displayed at a position overlapping a two-dimensional area set to overlap the position.

A program according to another aspect of the present invention is configured so as to control a computer to function as the object selecting device described above, and to execute the object selecting method described above on the computer.

The program of the present invention can be stored on a computer readable information recording medium, such as a compact disk, a flexible disk, a hard disk, a magneto-optical disk, a digital video disk, a magnetic tape, or a semiconductor memory.

The program can be distributed and sold, independently from a computer on which the program is executed, via a computer communication network. The information recording medium can be distributed and sold independently from the computer.

Effect of the Invention

According to the present invention, an object selecting device and object selecting method for allowing easy selection of objects displayed in a predetermined order, and a computer-readable information recording medium on which is stored a program for realizing these on a computer, as well as the program can be provided.

Brief Description of Drawings

FIG 1 is an explanatory view showing a schematic structure of a typical information processing device in which an object selecting device of the present invention is realized.

FIG 2 is an explanatory view showing an outer appearance of a controller.

FIG 3 is an explanatory view showing a schematic structure of the object selecting device according to the present embodiment.

FIG 4 is an explanatory view showing a state of objects disposed in a virtual space.

FIG 5 is a flowchart showing a flow of control of an object selection process executed by the object selecting device.

FIG 6 is an explanatory view showing a case in which screen display is performed by a frame buffer in a certain state.

FIG 7 is an explanatory view showing a state of information stored to an image buffer.

FIG 8 is an explanatory view showing screen display examples.

Explanations of Reference Numerals

| | |
|---|---|
| 100 | information processing device |
| 101 | CPU |
| 102 | ROM |
| 103 | RAM |
| 104 | interface |
| 105 | controller |
| 106 | external memory |
| 107 | image processor |
| 108 | DVD-ROM drive |
| 109 | NIC |
| 110 | sound processor |
| 111 | mic |
| 201 | up button |
| 202 | down button |
| 203 | left button |
| 204 | right button |
| 205 | circle button |
| 206 | cross button |
| 207 | triangle button |
| 208 | square button |
| 209 | SELECT button |
| 210 | START button |
| 211 | ANALOG button |
| 212 | indicator |
| 213 | joystick |
| 214 | joystick |
| 215 | L1 button |
| 216 | L2 button |
| 217 | R1 button |
| 218 | R2 button |
| 301 | object selecting device |
| 302 | object storage unit |
| 303 | Z buffer |
| 304 | frame buffer |
| 305 | image buffer |
| 306 | display unit |
| 307 | output unit |
| 308 | direction specifying input receiving unit |
| 309 | direction changing unit |
| 310 | designation specifying input receiving unit |
| 311 | designating unit |
| 401 | virtual space |
| 402 | cubical object |
| 403 | spherical object |
| 404 | pyramidal object |
| 405 | viewpoint |
| 406 | ray object |
| 407 | conical/pyramid body object |
| 408 | projection plane |
| 601 | screen |
| 602 | crosshairs |

Best Mode For Carrying Out The Invention

An embodiment of the present invention will be described below. While the following describes an embodiment in which the present invention is adapted for ease of understanding to an information processing device for games, the embodiment to be described below is given by way of illustration only, and not to limit the scope of the invention. Therefore, those having ordinary skill in the art can employ embodiments in which the individual elements or all the elements are replaced with equivalent ones, and such embodiments are also encompassed in the scope of the invention as defined by the appended claims.

First Embodiment

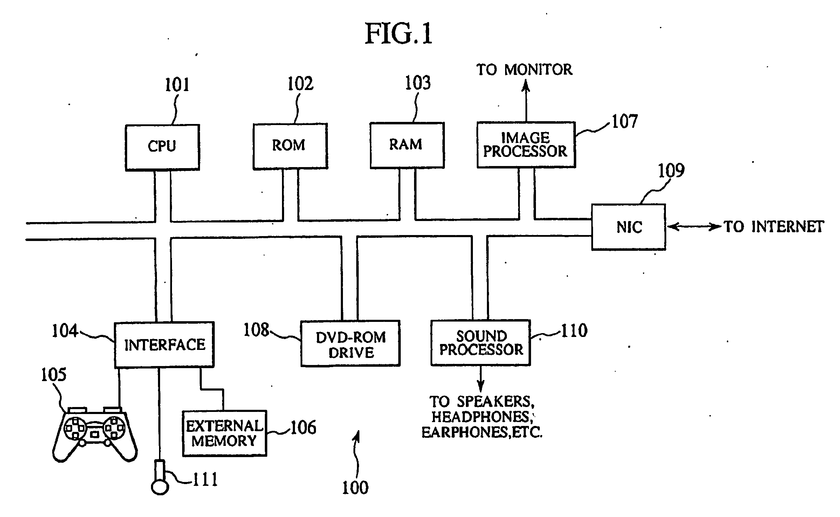

FIG 1 is an explanatory view showing a schematic structure of a typical information processing device that carries out the function of an object selecting device of the present invention by executing a program. A description is given below with reference to this drawing.

An information processing device 100 comprises a CPU (Central Processing Unit) 101, a ROM 102, a RAM (Random Access Memory) 103, an interface 104, a controller 105, an external memory 106, an image processor 107, a DVD-ROM (Digital Versatile Disc ROM) drive 108, an NIC (Network Interface Card) 109, a sound processor 110, and a mic 111.

As a DVD-ROM storing a program and data for a game is loaded into the DVD-ROM drive 108 and the information processing device 100 is powered on, the program is executed to realize the object selecting device of the present embodiment.

The CPU 101 controls operation of the entire information processing device 100, and is connected to individual components, and exchanges control signals and data therewith. Further, by using an ALU (Arithmetic Logic Unit) (not shown), the CPU 101 can perform arithmetic operations such as addition, subtraction, multiplication, division, etc., logical operations such as logical addition, logical multiplication, logical negotiation, etc., and bit operations such as bit addition, bit multiplication, bit inversion, bit shift, bit rotation, etc., in a storage area which can be accessed at a high speed known as a register (not shown). Furthermore, the CPU 101 itself may be designed so as to be able to rapidly perform saturate operations such as addition, subtraction, multiplication, division, etc., for dealing with multimedia processes, and vector operations such as trigonometric functions, etc., or may realize these with a coprocessor.

An IPL (Initial Program Loader) to be executed immediately after power-on is stored in the ROM 102, and as the IPL is executed, the program stored on the DVD-ROM is read into the RAM 103 and executed by the CPU 101. Further, the ROM 102 stores a program and various data for an operating system necessary for controlling the entire operation of the information processing device 100.

The RAM 103 is for temporarily storing data and programs, and retains the program and data read from the DVD-ROM, and other data needed for game proceedings and chat communication. Further, the CPU 101 performs processes such as providing a variable area to the RAM 103 to work the ALU directly upon values stored in variables to perform operations, or once values stored in the RAM 103 are stored in the register, performing operations on the register, and writing operation results back to the memory, etc.

The controller 105 connected via the interface 104 receives an operation input which is made when a user executes the game.

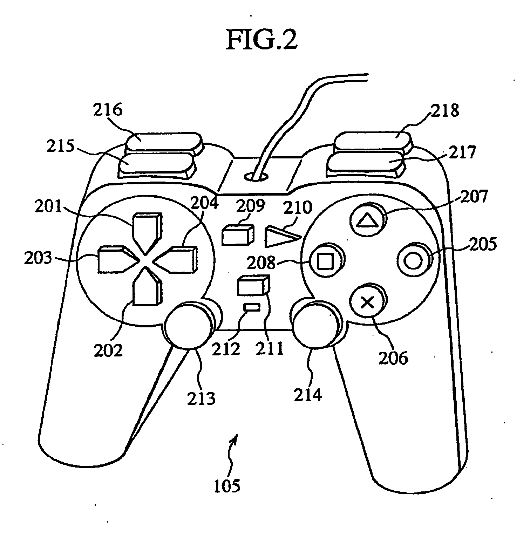

FIG 2 is an explanatory diagram showing an outer appearance of the controller 105. A description is given below with reference to this diagram.

Arranged on the left side of the controller 105 are an up button 201, a down button 202, a left button 203, and a right button 204, which are used for making operation inputs indicating upward, downward, leftward, and rightward.

Arranged on the right side are a circle button 205 used for making an designation operation input, a cross button 206 used for making a cancel operation input, a triangle button 207 used for making a specifying input for menu display, etc., and a square button 208 used for making other specifying inputs.

In the center are arranged an ANALOG button 211 for specifying starting or stopping analog input and an indicator 212 for indicating whether analog input is enabled or disabled, in addition to a SELECT button 209 and a START button 210.

Joysticks 213 and 214 for making specifying inputs associated with intensity in directions not limited to the upward, downward, leftward, and rightward directions are arranged on the lower center portion.

Furthermore, an L1 button 215, an L2 button 216, an R1 button 217, and an R2 button 218, which can be used for various operation inputs, are arranged on the upper portion.

The buttons 201 to 208 and 215 to 218 of the controller 105 are each equipped with a pressure sensor, so that which button pressed can be detected and the level of the pressure of the user's pressing can be obtained based on 256 steps of 0 to 255, in a case where analog input is made effective.

The joysticks 213 and 214 of the controller 105 are equipped with strain gauges, so that the direction and how much these are bent can be detected.

Returning to FIG 1, the external memory 106 detachably connected via the interface 104 rewritably stores data indicating the play status (past achievement, etc.) of a game, etc., data indicating the progress status of the game, data of chat communication logs (records) when playing over a network, etc. As the user makes an instruction input via the controller 105, these data can adequately be stored in the external memory 106.

The program for realizing the game, the image data and audio data accompanying the game are recorded in the DVD-ROM to be loaded into the DVD-ROM drive 108. Under the control of the CPU 101, the DVD-ROM drive 108 performs a process of reading from the DVD-ROM loaded therein to read a necessary program and data, and these are temporarily stored in the RAM 103 or the like.

The image processor 107 processes data read from the DVD-ROM by means of the CPU 101 and an image operation processor (not shown) provided in the image processor 107, and then records the data in a frame memory (not shown) in the image processor 107. The image information recorded in the frame memory is converted to a video signal at a predetermined synchronous timing, which is in turn output to a monitor (not shown) connected to the image processor 107. Image displays of various types are therefore possible.

The image operation processor can rapidly perform an overlay operation of a two-dimensional image, transparent operations such as alpha blending, and various kinds of saturate operations.

It is also possible to rapidly perform an operation of rendering polygon information which is arranged in a virtual three-dimensional space and to which various kinds of texture information are added, by using a Z buffer method to acquire a rendered image with a downward view of a polygon along a predetermined sight line, arranged in the virtual three-dimensional space, from the predetermined viewpoint position.

Further, the CPU 101 and the image operation processor cooperate to be able to write a string of characters as a two-dimensional image in the frame memory or on each polygon surface according to font information which defines the shapes of characters.

The NIC 109 is for connecting the information processing device 100 to a computer communication network (not shown), such as the Internet, and includes an analog modem in compliance with the 10 BASE-T/100 BASE-T standard which is used at the time of constructing a LAN (Local Area Network) or for connecting to the Internet using a telephone line, an ISDN (Integrated Services Digital Network) modem, an ADSL (Asymmetric Digital Subscriber Line) modem, a cable model for connecting to the Internet using a cable television line, or the like, and an interface (not shown) which intervenes between these modems and the CPU 101.

The sound processor 110 converts audio data read from the DVD-ROM to an analog audio signal, and outputs the analog audio signal from a speaker (not shown) connected thereto. Under the control of the CPU 101, the sound processor 109 generates sound effects and music data to be generated during progress of the game, and outputs sounds corresponding thereto from a speaker.

In a case where the audio data recorded on the DVD-ROM is MIDI data, the sound processor 110 refers to the sound source data included in the data, and converts the MIDI data to PCM data. Further, in a case where the audio data is compressed audio data of ADPCM format or Ogg Vorbis format, etc., the sound processor 110 expands the data, converting it to PCM data. The PCM data is D/A (Digital/Analog) converted at a timing corresponding to the sampling frequency of the data and output to the speaker, thereby enabling audio output.

Further, the information processing device 100 can be connected to the mic 111 via the interface 104. In this case, A/D conversion is performed on the analog signal from the mic 111 at an appropriate sampling frequency, thus making it possible to perform mixing, etc., with the sound processor 110 using a PCM-type digital signal.

In addition, the information processing device 100 may be configured to achieve the same functions as the ROM 102, the RAM 103, the external memory 106, and the DVD-ROM or the like which is to be loaded into the DVD-ROM drive 108 by using a large-capacity external storage device, such as a hard disk.

The information processing device 100 discussed above is equivalent to a so-called "consumer-oriented television game apparatus," but anything which performs image processing so as to display a virtual space can realize the present invention. Accordingly, the present invention can be realized on a variety of computational machines, such as portable telephones, portable game devices, karaoke apparatuses, common business computers, and so on.

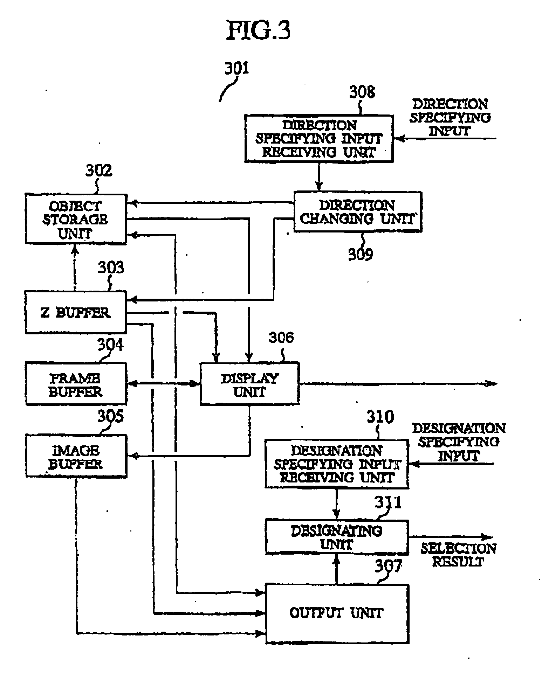

FIG. 3 is an explanatory view showing a schematic structure of the object selecting device according to the present embodiment. A description is given below with reference to this drawing.

The object selecting device 301 according to the present embodiment comprises an object storage unit 302, a Z buffer 303, a frame buffer 304, an image buffer 305, a display unit 306, an output unit 307, a direction specifying input receiving unit 308, a direction changing unit 309, a designation specifying input receiving unit 310, and a designating unit 311.

With the present embodiment, a state of a virtual space is displayed and objects disposed within the virtual space are selected. A viewpoint and a projection plane are envisioned inside the virtual space, and perspective projection and parallel projection are used when displaying screens. When performing perspective projection of an object, coordinates where a line segment connecting an object and the viewpoint intersects with the projection plane are associated with coordinates on the screen, to perform rendering. When performing parallel projection, a line parallel to a direction of a line of sight is extended from an object towards a point at infinity and coordinates at which this intersects the projection plane are used.

The object storage unit 302 is an area storing property information, etc., indicating a position, attitude, polygon information, and texture information of an object stored in the virtual space, as well as whether an object is one expressing a ray extending from the viewpoint (hereafter called a "ray object"), or one expressing a conical/pyramid body with the viewpoint at its apex (hereafter called a "conical/pyramid object"), or another, ordinary object (hereafter called a "general object"). A publicly known three-dimensional object management technology is applied when storing objects to this area.

Moreover, with the present embodiment, there is one ray object and one conical/pyramid object which moves inside the virtual space in coordination with the ray object, and an infinitely large circular cone, whose apical angle at its apex is fixed, is used as the shape of the conical/pyramid object.

On the other hand, the Z buffer 303 is an alignment of addresses, at which general objects are stored to the object storage unit 302, sorted based on distance from the viewpoint. Accordingly, general objects can be accessed in order from farthest from the viewpoint by scanning this arrangement in a fixed direction, and general objects can be accessed in order from closest from the viewpoint by scanning in the opposite direction.

With the present embodiment, the object storage unit 302 and the Z buffer 303 are set aside inside the RAM 103.

On the other hand, the frame buffer 304 is an area used when the display unit 306 displays a state of the virtual space seen from the viewpoint on the monitor connected to the image processor 107, and the image processor 107 scans the Z buffer 303 in order of distance from the viewpoint, and draws general objects on the frame buffer using perspective projection based on position information, light source information, texture information, and so on. Information drawn on the frame buffer is displayed on the screen of the monitor according to a vertical synchronization signal.

The image buffer 305 is a frame buffer not intended actually to display on the screen (although it may), and when drawing general objects, an alignment index (this is equivalent to a ranking of closeness to (famess from) from the viewpoint) of the objects in the Z buffer 303 is adopted as the color (pixel values) of the objects. Accordingly, if the position in the screen is specified, whether an object is visible at that position or not can be determined immediately from the pixel value in the image buffer 305 corresponding thereto. Accordingly, the image buffer 305 functions as a range rank storage unit.

With the present embodiment, the frame buffer 304 and the image buffer 305 are typically set aside in the RAM 103, but a storage area accessible at high speed prepared inside the image processor 107 may also be used.

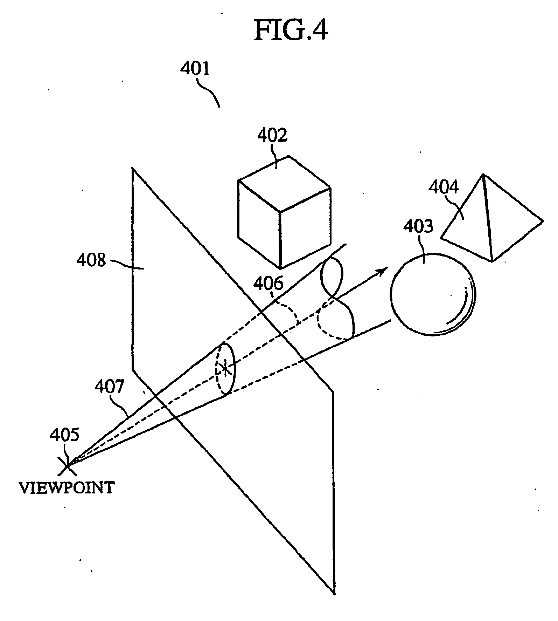

FIG. 4 is an explanatory view showing a state of objects disposed in a virtual space. A description is given below with reference to this drawing.

A cubical object 402, a spherical object 403, and a pyramidal object 404 are disposed in a virtual space 401 as general objects. A ray object 406 extending from a viewpoint 405 and a circular cone-shaped conical/pyramid object 407 with the ray object 406 at its center are also disposed.

A virtual projection plane 408 is also disposed in the virtual space 401, and coordinates at which each object is displayed on the screen are defined by the positions at which a line segment connecting each object and the viewpoint 405 intersect the projection plane 408. This kind of projection technology is called perspective projection.

With the alignment example in this drawing, the order of closeness from the viewpoint 405 is the cubical object 402, the spherical object 403, and the pyramidal object 404.

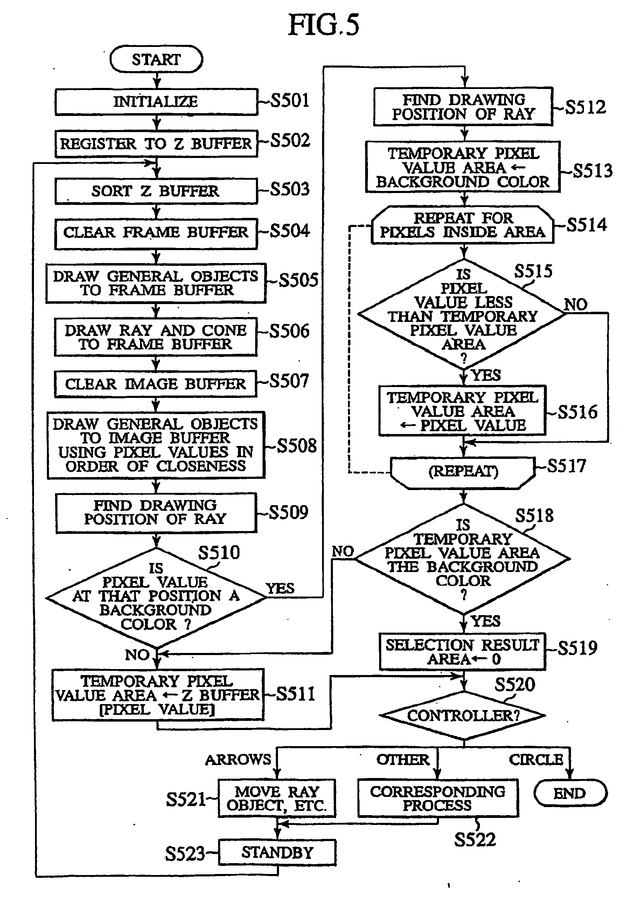

FIG 5 is a flowchart showing a flow of control of an object selection process executed by the object selecting device 301. A description is given below with reference to this drawing.

When this process is executed, first the CPU 101 initializes by storing information of the general objects, the ray objects, and the conical/pyramid objects disposed in the virtual space to the object storage unit 302 (step S501).

Next, the CPU 101 registers address of the general objects to the Z buffer 303 (step S502) and sorts the Z buffer 303 by distance of the objects designated by the addresses from the viewpoint 405 (step S503). For example, when sorted in order of closeness,

(1) the zeroth element in the alignment is the cubical object 402,
(2) the first element in the alignment is the spherical object 403, and
(3) the second element in the alignment is the pyramidal object 404.

Further, the image processor 107 clears the frame buffer 304 with a background color for display (step S504), then references the Z buffer 303 and the object storage unit 302 and draws the general objects in order of distance from the viewpoint 405 (in this example, the alignment index scans from 2 to 0, in the order of the pyramidal object 404, the spherical object 403, and the cubical object 402) to the frame buffer 304 (step S505). At this time, an ordinary three-dimensional graphics generation process is performed, referencing the position of the viewpoint 405 and the position of a light source, etc., in addition to information on the position, attitude, and texture of the general objects stored in the object storage unit 302.

Next, the image processor 107 references the object storage unit 302 and draws the ray object 406 and the conical/pyramid object 407 on the frame buffer 304 (step S506). Methods may also be employed of displaying the ray object 406 and the conical/pyramid object 407 in a semi-transparent color, displaying only the circumference of the conical/pyramid object 407 in dotted lines, etc. Further, since performing a perspective projection of the ray object 406 always results in a single dot, it is also possible to display a symbol such as crosshairs in order to make it stand out.

Image information stored in the frame buffer 304 in this manner becomes the actual screen displayed to the monitor connected to the image processor 107, with the vertical sync interrupt as a unit of time.

For example, when displaying an 800 × 600 dots image in 24-bit color, an area of 3 × 800 × 600 = 1440000 bytes is needed as the frame buffer 304.

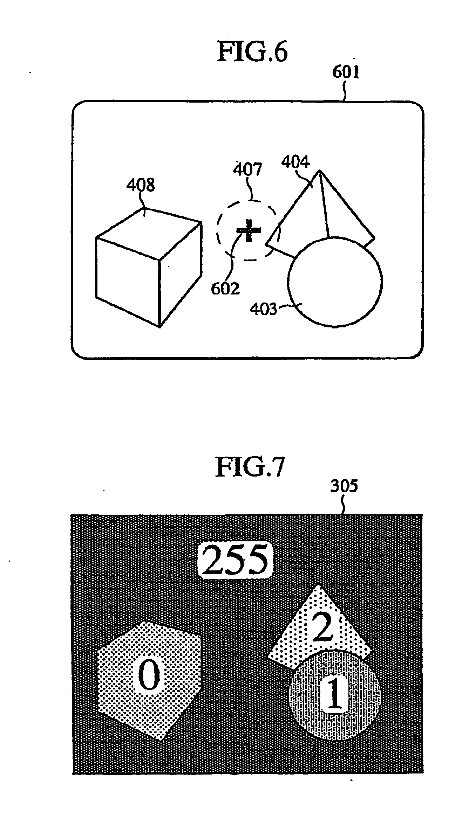

FIG. 6 is an explanatory view showing a case in which screen display is performed by a frame buffer in a certain state. A description is given below with reference to this drawing.

As shown in this drawing, the cubical object 402, the spherical object 403, and the pyramidal object 404 are displayed on a screen 601 as general objects.

A crosshairs 602, for making the direction of the ray object 406 outstanding, and the conical/pyramid object 407 are also displayed as other objects. In this drawing, for ease of understanding, only the circumference of the conical/pyramid object 407 is displayed as a dotted line, but it is also possible to employ a semi-transparent color as described above such that general objects intersecting with the conical/pyramid object 407 can be seen through it.

Further, the image processor 107 clears the image buffer 305 with a background color for distance (step S507), then references the Z buffer 303 and the object storage unit 302 and draws the general objects in order of farness from the viewpoint 405 (in this example, the alignment index scans from 2 to 0, in the order of the pyramidal object 404, the spherical object 403, and the cubical object 402) on the image buffer 305 (step S508).

At this time, the alignment index is used for pixel values. In other words, in this example, the pyramidal object 404 is drawn with a pixel value of 2, the spherical object 403 with a pixel value of 1, and the cubical object 402 with a pixel value of 0.

For the image buffer 305, 24-bit color is not necessarily. A limit is set on the number of general objects drawn to the image buffer 305, or this number is limited by limiting the distance of the general objects from the viewpoint 405.

For example, if one pixel in the image buffer 305 is desired to be 1 byte = 8 bits, a pixel value of "$2^8-1=255$" may be used as the background color for distance, and the number of general objects may be 255, from "0" to "254."

Further, if one pixel in the image buffer 305 is desired to be 1/2 byte = 4 bits, a pixel value of "$2^4-1=15$" may be used as the background color for distance, and the number of general objects may be 15, from "0" to "14."

As regards associating numbers in this manner, reversing the order, employing the results of application of predetermined functions or computations, and other modifications are possible, and are all included in the scope of the present invention.

Further, since the image buffer 305 is not intended for actually displaying on the screen, even if the frame buffer is 800 × 600 dots, there is no need to use this same size, so it is possible to use a reduced size, such as, for example, 400 × 300 dots, 200 × 150 dots, 100 × 75 dots, and so on. Since the size of the image buffer 305 can thus be reduced in this way, it is possible not only to raise usage efficiency of the RAM 103, but it is also possible to suppress drawing time to the image buffer 305.

FIG. 7 is an explanatory view showing a state of information stored in an image buffer 305. A description is given below with reference to this drawing.

As shown in the drawing, the image buffer 305 is a pixel alignment in a shape corresponding to the screen (typically with the screen dots reduced), and the pyramidal object 404 is written with a pixel value of 2, the spherical object 403 with a pixel value of 1, the cubical object with a pixel value of 0, and other areas with a pixel value of 255 as the background color for distance.

The image processor 107 thus functions as the display unit 306 working together with the RAM 103, etc., under the control of the CPU 101. Further, the image buffer prepared in the RAM 103 functions as the range rank storage unit.

Next, the image processor 107 finds the coordinates in the image buffer 305 in a case in which the ray object 406 is drawn on the image buffer 305 under the control of the CPU 101 (step S509). As described above, a perspective projection technology may be used. -

The pixel value of those coordinates in the image buffer 305 is acquired, and a judgment is made as to whether or not the value is the background color for distance (step S510). If the pixel value is not the background color for distance (step S510: No), an address of an object obtained by employing the pixel value as the alignment index of the Z buffer 303 is output to a selection result area prepared in the RAM 103 (step S511).

This is equivalent to a case in which the cursor expressed as the crosshairs 602 directly overlaps one of the general objects (directly indicating a general object), and the object output on the selection result area is the object indicated by the cursor expressed as the crosshairs 602.

Next, if the value is the background color for distance (step S510: Yes), the image processor 107 finds the area in the image buffer 305 in a case in which the conical/pyramid object 407 is drawn on the image buffer 305 under the control of the CPU 101 (step S512).

In the present embodiment, since a circular shape is employed as the conical/pyramid object 407, the shape of this area (the area surrounded by the dotted lines in FIG 6) is circular or elliptical. Aside from this, if a quadrangular cone is employed as the conical/pyramid object 407, the shape of the area is square. Various modifications of the shape of this area are discussed below.

The background color for distance is substituted into a temporary pixel value area prepared in the RAM 103 (step S513), and the following process is repeated for all the pixels included in this area in the image buffer 305 (step S514 to step S517).

Namely, a judgment is made as to whether the pixel value of the current pixel is smaller than that stored in the temporary pixel value area (step S515), and if this is the case (step S515: Yes), the current pixel value is substituted into the temporary pixel value area (step S516), and the process is repeated for other pixels (step S514 to step S517). On the other hand, if this is not the case (step S515: No), the process is repeated for other pixels (step S514 to S517).

Once the repeated process (step S514 to step S517) for the pixels included in the area is finished, a judgment is made as to whether or not the pixel value stored in the temporary pixel value area is the background color for distance (step S518), and if not (step S518: No), then the process moves to step S511. If it is (step S518: Yes), an address 0 is output to the selection result area (step S519), expressing that there is "no" selection result.

The process repeated in step S514 to step S517 searches for the smallest pixel value in the area, or in other words, the general object to be drawn in the area which is closest to the viewpoint (in other words, the general object associated with the smallest pixel value of all the pixel values drawn in the area). In other words, this is a state in which the cursor expressed by the crosshairs 602 does not indicate any of the general objects, but the circle (the area) of the dotted lines expressing the vicinity thereof is overlapping one of the general objects.

Thus, the CPU 101 functions as the output unit 307 working together with the image processor 107 and the RAM 103.

After step S511 and step S519, the CPU 101 monitors the pressing operation status of the controller 105 (step S520), and if any of the up button 201, the down button 202, the left button 203, and the right button 204 is pressed (step S520: arrow), the direction of the ray object 406 and the conical/pyramid object 407 is changed by a predetermined small amount so as to move the crosshairs 602 in that direction and the object storage unit 302 is updated (step S521); the process moves to step S523.

On the other hand, if the circle button 205 is pressed (step S520: circle), this process ends. The selection result of the object is thus output using the value written in the selection result area in the RAM 103.

Accordingly, under the control of the CPU 101, the up button 201, the down button 202, the left button 203, and the right button 204 function as the direction specifying input receiving unit 308, the circle button 205 functions as the designation specifying input receiving unit 310, and the CPU 101, working together with the RAM 103, functions as the direction changing unit 309 and the designating unit 311.

The direction specifying input receiving unit 308 and the designation specifying input receiving unit 310 specify the direction of the ray object 406 and the conical/pyramid object 407, but the position in the screen is specified by the crosshairs 602 which moves in coordination therewith. Accordingly, these function also as the position specifying input receiving unit for receiving a position specifying input for specifying a position in the screen.

On the other hand, if another button is pressed, or if nothing is pressed (step S520: Other), a pressing operation or an operation corresponding to no pressing is executed (step S522), and the procedures stands by until the vertical sync interrupt (step S523). Other operations can be executed as co-routines during standby.

Once standby (step S523) finishes, the display screen of the monitor is updated with the content of the frame buffer 304, and therefore the procedure returns to step S503. This is because the position, etc., of the general objects is changed by the standby process (step S523) or corresponding processes (step S522).

Moreover, if, immediately before standby (step S523), there is a general object at the address output to the selection result area, it is also possible to add a process for emphasizing display of the general object. Methods for emphasizing display are making the border of the general object thick (for example, it is possible to use toon shading technology), displaying the general object brightly, displaying a cursor image indicating the general object, etc.

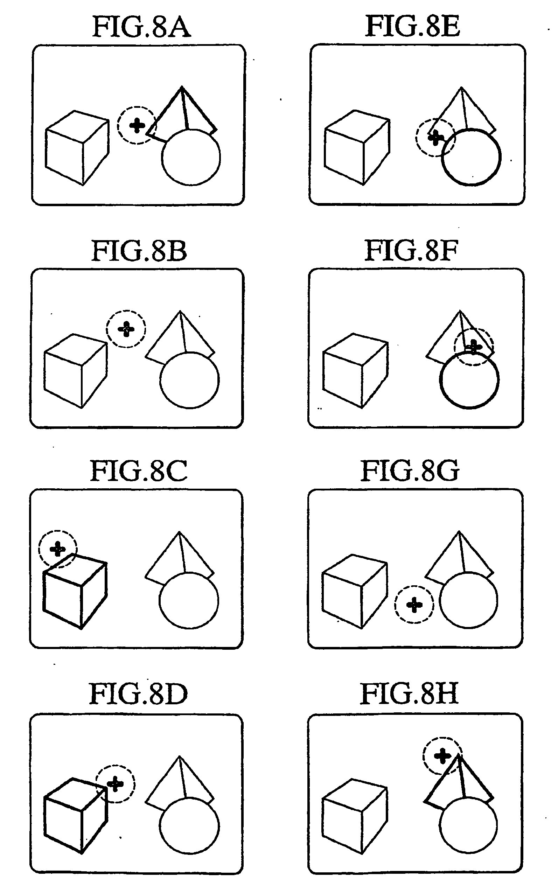

FIG. 8 is an explanatory view showing screen display examples. In these examples, the general object at the address output to a current result area is displayed with its border thick. The border of the conical/pyramid object 407 surrounding the crosshairs 602 is displayed as a dotted line. Moreover, in this drawing, for ease of understanding, even if the position of the conical/pyramid object 407 moves, the shape of the border remains a circle. The shape with which the conical/pyramid object 407 surrounding the crosshairs 602 is displayed on the screen may be a fixed-shape circle, square, rectangle, ellipse, or oval, etc., or the shape of a circular cone or a pyramidal cone when cut by the projection plane may be employed.

In (a) and (h) of this drawing, the (display range of the) conical/pyramid object 407 and the (display range of the) pyramidal object 404 intersect; therefore, the pyramidal object 404 is displayed with emphasis. Pressing the circle button 205 in this state designates the pyramidal object 404 as the selection result.

In (b) and (g) of this drawing, there is no (display range of an) object intersected by the (display range of the) conical/pyramid object 407; therefore no object is displayed with emphasis.

In (c) and (d) of this drawing, the (display range of the) conical/pyramid object 407 and the (display range of the) cubical object 402 intersect; therefore, the cubical object 402 is displayed with emphasis. Pressing the circle button 205 in this state designates the cubical object 402 as the selection result.

In (e) and (f) of this drawing, both the (display range of the) pyramidal object 404 and the (display range of the) spherical object 403 intersect with the (display range of the) conical/pyramid object 407, but since the spherical object 403 is closer in the closeness order to the viewpoint 405 than the pyramidal object 404, pressing the circle button 205 in this state designates the spherical object 403 as the selection result.

With the present embodiment, it is possible to easily select an object through intuitive specification by the user.

Moreover, with the present embodiment, direction specifying input is performed by using the controller 105, but it is also possible to specify positions with a finger or a pen on a touch panel, or specify positions by moving a mouse cursor and clicking, thus displaying the crosshairs 602 at the specified position.

In this case, a calculation is made of where in the projection plane 408 in the virtual space 401 the position specified by the user in the screen 601 corresponds to, and a ray from the viewpoint 405 to the corresponding point in the projection plane 408 is set.

The conical/pyramid object 407 need not always be displayed. Further the above processes are performed by handling specification of a position with a finger or a pen on a touch panel or specification of a position by moving a mouse cursor and clicking as replacing direction specifying input and also being designation specifying input.

Accordingly, these devices perform functions essentially equal to the functions performed by the direction specifying input receiving unit 308 in the object selecting device 301, and function as a position specifying input receiving unit and function as the designation specifying input receiving unit 310.

Example

In the above embodiment, at step S506, the conical/pyramid object 407 is drawn on the frame buffer 304, and at step S512, an area is found in the image buffer 305 in a case in which the conical/pyramid object 407 is drawn on the image buffer 305, but in the present examle, the conical/pyramid object 407 is not used.

In other words, an area with a fixed shape including a position when the ray object 406 is drawn on the frame buffer 304 or the image buffer 305 is employed.

For example, a square, a rectangle, or a circle of a predetermined size which moves together with the dot at which the ray object 406 is projected (the dot is typically the center) is employed as the shape of the area.

In this case, the drawing on the frame buffer 304 at step S506 is drawing a square, rectangle, or circle, etc., of a fixed size semi-transparently or with dotted lines as the border.

Further, the area acquired at step S512 is the square, rectangle, or circle of a fixed size which moves together with the projection point of the ray object 406.

In the above embodiment, when the crosshairs 602 was moved within the screen, the shape of the area in which the conical/pyramid object 407 is drawn changed, but in the present example, the shape of the area selected by intersecting with a general object does not change, even if the crosshairs 602 is moved within the screen.

With the present example, by not using the conical/pyramid object 407, objects can be selected easily.

Second Embodiment

With the above embodiments, the image buffer 305 was used to find intersection of the ray object 406 or the conical/pyramid object 407 with general objects, but intersection may also be found using common figure computation in three-dimensional space.

For example, a case is considered in which the apical angle of the apex of the conical/pyramid object 407 is 2θ, or in other words, the angle of divergence from the ray object 406 which is the central axis is θ.

If in the virtual space, r is the position vector of the viewpoint 405, d is the direction vector of the ray object 406, and s is the position vector of a certain point inside a general object, and

$$(s - r) * d/(|s||d|) = 1$$

then the ray object 406 passes through the certain point.

Further, if

$$(s - r) * d/(|s||d|) = \cos\varphi \text{ and } \varphi \leq \theta$$

then the conical/pyramid object 407 intersects with that general object. Here, " * " is a computation to find the inner product of the vector, and " || " is a computation for finding the length of the vector.

The intersection of a general object with the ray object 406 or the conical/pyramid object 407 is thus judged using three-dimensional figure computation.

With the present embodiment, if the conical/pyramid object 407 is a circular cone, it is possible to find the intersection of objects using calculation such as simply vector calculation without using the image buffer 305.

Third Embodiment

With the above embodiments, a virtual space of a three-dimensional space is envisioned, and selection of objects is performed under conditions in which objects are disposed therein. However, the principle of the present invention envisions some kind of ordering of the objects, and can be applied to situations in which overlapping display of objects is done according to that ordering.

Discussed below is a method for selecting objects applied to a situation in which any one of a plurality of images expressing items disposed to a two-dimensional plane is selected, such as, for example, a case in which playing cards are selected.

With the above embodiments, objects are ordered by distance from a viewpoint, the ordering being determined by closeness to or farness from the viewpoint (determined by the order or the reverse order in the Z buffer); if a plurality of objects are candidates for selection, an object furthest forward in the order (in other words, closest to the viewpoint) is selected. With the present embodiment, this is further generalized.

A "predetermined order" is set for a case in which objects are displayed overlapping, and if objects overlap, objects further forward in the order are displayed to hide objects further back in the order, and if a plurality of objects are candidates for selection, an object furthest forward in the order is selected.

For example, the example shown in FIG. 8 can be thought of as a state in which a two-dimensional object of a picture made up of a combination of three diagonal four-sided shapes, a two-dimensional object of a picture of a circle, and a two-dimensional object of a picture made up of a pair of triangles, expressed in this order.

When the crosshairs is in a position overlapping one of the two-dimensional objects, that two-dimensional object is selected.

On the other hand, if the crosshairs does not overlap any of the two-dimensional objects, the object furthest forward in the order is selected from among the two-dimensional objects overlapping a two-dimensional area surrounded by a dotted line.

The present embodiment envisions a two-dimensional space as a virtual space, maintaining the forward-and-back relationship of the objects, and details of processes can be performed as in the above embodiments.

Industrial Applicability

As described above, with the present invention, an object selecting device and object selecting method for allowing easy selection of objects displayed in a predetermined order, and a computer-readable information recording medium on which is stored a program for realizing these on a computer, as well as the program can be provided.

**Claims**

1. An object selecting device (301), comprising:

a display unit (306) which displays objects ordered in a predetermined order on a screen, said display unit (306) displaying an object further forward in the order so as to hide an object further back in the order, when the object further forward is displayed overlapping the objects further back;
a position specifying input receiving unit (308) which receives a position specifying input for specifying a position in the screen; and
an output unit (307) which outputs, among objects displayed on the screen, (a) as a selection result, a particular object in the order of objects displayed at a position, if there is an object displayed at the position specified by said position specifying input, and (b) as a selection result, a particular object in the order of objects displayed at a position overlapping a two-dimensional area set so as to include the position, if there is no object displayed at a position specified by the position specifying input, but there is an object displayed at the overlapping position; and

**characterized in that:**

the particular object as the selection result (a) and (b), respectively, is an object furthest forward in the order of objects displayed at the position specified or at the position overlapping the two-dimensional area set so as to include the position, respectively;

each of the objects is disposed in a virtual space; an object further forward in the order is closer to a viewpoint disposed in the virtual space than an object further back in the order;

said output unit (307) determines a direction of a ray being disposed in the virtual space and extending from said viewpoint, based on a position specified by said position specifying input;

said output unit (307) outputs, among objects disposed to the virtual space, (a) as a selection result, an object closest to the viewpoint among objects intersecting the ray, if there is an object that intersects said ray, and (b) as a selection result, an object closest to the viewpoint among objects intersecting a three-dimensional arca, if there is no object that intersects the ray, but there is an object that intersects a three-dimensional area that is set so as to include the ray in the virtual space, and whose corresponding area on the screen is a two-dimensional area;

the three-dimensional area is a conical/pyramid body that has the viewpoint as an apex, which includes the ray, and whose position with respect to the ray is fixed;

said display unit (306) displays on the screen an image in which the ray and the conical/pyramid body arc seen from the viewpoint; and

an area in which the conical/pyramid body is displayed in the image is the two-dimensional area.

2.  The object selecting device (301) according to claim 1, further comprising:

a range rank storage unit which stores in association with each other objects disposed in the virtual space, a range within the screen on which the object is displayed, and a rank of closeness of the object and the viewpoint, wherein;

said output unit (307) outputs, among objects disposed in the virtual space, (a) as a selection result, an object stored in said range rank storage unit in association with an area including a position at which the ray is displayed in the screen, if a range including a position at which the ray is displayed on the screen is stored in said range rank storage unit, and (b) as a selection result, an object stored as that whose rank of closeness from object to viewpoint is closest, of objects stored in said range rank storage unit in association with a range intersecting a range in which the conical/pyramid body is displayed on the screen, if no range including a position at which the ray is displayed in the screen is stored in said range rank storage unit, but a range intersecting with a range in which the conical/pyramid body is displayed on the screen is stored in said range rank storage unit.

3.  The object selecting device (301) according to claim 2, wherein:

said range rank storage unit is an image buffer; and

an object is stored in association with a range in which the object is displayed on the screen and a rank of closeness of the object and the viewpoint, as said display unit (306) draws objects disposed in the virtual space to the image buffer, using a rank of closeness of the object and the viewpoint as a pixel value, in order of distance from the vi ewpoint.

4.  The object selecting device (301) according to claim 1, wherein:

said output unit (307) judges an intersection of the object with the ray or an intersection of the object with the conical/pyramid body based on an angle formed by a direction vector of the ray and a position vector of the object with respect to the viewpoint.

5.  The object selecting device (301) according to claim 1, wherein:

said position specifying input receiving unit (308) comprises a direction specifying input receiving unit (308) which receives input of direction specifying input for specifying a direction of the ray in the virtual space; and further comprising:

a direction changing unit (309) which changes a direction of the conical/pyramid body, by changing a direction of the ray, to a direction specified by the direction specifying input received, wherein

said output unit (307) uses a direction changed by said direction changing unit (309) as a direction of a ray being disposed in the virtual space and extending from the viewpoint.

6. The object selecting device (301) according to claim 1, wherein:

an object output by said output unit (307) as a selection result has a distance from the viewpoint less than or equal to a predetermined threshold.

7. An object selecting method, comprising:

a display step of displaying objects ordered in a predetermined order on a screen, and displaying an object further forward in the order so as to hide an object further back in the order, when the object further forward is displayed overlapping the objects further back;

a position specifying input receiving step of receiving a position specifying input for specifying a position in the screen; and

an output step of outputting, among objects displayed on the screen, (a) as a selection result, a particular object in the order of objects displayed at a position, if there is an object displayed at the position specified by the position specifying input, and (b) as a selection result, a particular object in the order of objects displayed at a position overlapping a two-dimensional area set so as to include the position, if there is no object displayed at a position specified by the position specifying input, but there is an object displayed at the overlapping position; and

**characterized in that:**

the particular object as the selection result (a) and (b), respectively, is an object furthest forward in the order of objects displayed at the position specified or at the position overlapping the two-dimensional area set so as to include the position, respectively;

each of the objects is disposed in a virtual space;

an object further forward in the order is closer to a viewpoint disposed in the virtual space than an object further back in the order;

in said output step, a direction of a ray being disposed in the virtual space and extending from said viewpoint is determined, based on a position specified by said position specifying input;

in said output step, among objects disposed to the virtual space, (a) as a selection result, an object closest to the viewpoint among objects intersecting the ray is output, if there is an object that intersects said ray, and (b) as a selection result, an object closest to the viewpoint among objects intersecting a three-dimensional area is output, if there is no object that intersects the ray, but there is an object that intersects a three-dimensional area that is set so as to include the ray in the virtual space, and whose corresponding area on the screen is a two-dimensional area;

the three-dimensional area is a conical/pyramid body that has the viewpoint as an apex, which includes the ray, and whose position with respect to the ray is fixed;

said display unit (306) displays on the screen an image in which the ray and the conical/pyramid body are seen from the viewpoint; and

an area in which the conical/pyramid body is displayed in the image is the two-dimensional area.

8. A computer-readable information recording medium storing a program for controlling a computer to function as:

a display unit (306) which displays objects ordered in a predetermined order on a screen, said display unit (306) displaying an object further forward in the order so as to hide an object further back in the order, when the object further forward is displayed overlapping the object further back;

a position specifying input receiving unit (308) which receives a position specifying input for specifying a position in the screen; and

an output unit (307) which outputs, among objects displayed on the screen, (a) as a selection result, a particular object in the order of objects displayed at a position, if there is an object displayed at the position specified by the position specifying input, and (b) as a selection result, a particular object in the order of objects displayed at an overlapping position, if there is no object displayed at a position specified by the position specifying input, but there is an object displayed at a position overlapping a two-dimensional area set so as to include the position; and

**characterized in that:**

the particular object as the selection result (a) and (b), respectively, is an object furthest forward in the order of objects displayed at the position specified or at the position overlapping the two-dimensional area set so as to include the position, respectively;

each of the objects is disposed in a virtual space;

an object further forward in the order is closer to a viewpoint disposed in the virtual space than an object further back in the order;
said output unit (307) determines a direction of a ray being disposed in the virtual space and extending from said viewpoint, based on a position specified by said position specifying input;
said output unit (307) outputs, among objects disposed to the virtual space, (a) as a selection result, an object closest to the viewpoint among objects intersecting the ray, if there is an object that intersects said ray, and (b) as a selection result, an object closest to the viewpoint among objects intersecting a three-dimensional area, if there is no object that intersects the ray, but there is an object that intersects a three-dimensional area that is set so as to include the ray in the virtual space, and whose corresponding area on the screen is a two-dimensional area;
the three-dimensional area is a conical/pyramid body that has the viewpoint as an apex, which includes the ray, and whose position with respect to the ray is fixed;
said display unit (306) displays on the screen an image in which the ray and the conical/pyramid body are seen from the viewpoint; and
an area in which the conical/pyramid body is displayed in the image is the two-dimensional area.

9. A program for controlling a computer to function as:

a display unit (306) which displays objects ordered in a predetermined order on a screen, said display unit (306) displaying an object further forward in the order so as to hide an object further back in the order, when the object further forward is displayed overlapping the object further back;
a position specifying input receiving unit (308) which receives a position specifying input for specifying a position in the screen; and
an output unit (307) which outputs, among objects displayed on said screen, (a) as a selection result, a particular object in the order of objects displayed at a position, if there is an object displayed at the position specified by the position specifying input, and (b) as a selection result, a particular object in the order of objects displayed at an overlapping position, if there is no object displayed at a position specified by the position specifying input, but there is an object displayed at a position overlapping a two-dimensional area set so as to include the position, and

**characterized in that:**

the particular object as the selection result (a) and (b), respectively, is an object furthest forward in the order of objects displayed at the position specified or at the position overlapping the two-dimensional area set so as to include the position, respectively;
each of the objects is disposed in a virtual space;
an object further forward in the order is closer to a viewpoint disposed in the virtual space than an object further back in the order;
said output unit (307) determines a direction of a ray being disposed in the virtual space and extending from said viewpoint, based on a position specified by said position specifying input;
said output unit (307) outputs, among objects disposed to the virtual space, (a) as a selection result, an object closest to the viewpoint among objects intersecting the ray, if there is an object that intersects said ray, and (b) as a selection result, an object closest to the viewpoint among objects intersecting a three-dimensional area, if there is no object that intersects the ray, but there is an object that intersects a three-dimensional area that is set so as to include the ray in the virtual space, and whose corresponding area on the screen is a two-dimensional area;
the three-dimensional area is a conical/pyramid body that has the viewpoint as an apex, which includes the ray, and whose position with respect to the ray is fixed;
said display unit (306) displays on the screen an image in which the ray and the conical/pyramid body are seen from the viewpoint; and
an area in which the conical/pyramid body is displayed in the image is the two-dimensional area.

**Patentansprüche**

1. Objektauswahleinrichtung (301), die aufweist:

eine Anzeigeeinheit (306), die in einer vorbestimmten Reihenfolge geordnete Objekte auf einem Bildschirm anzeigt, wobei die Anzeigeeinheit (306) ein Objekt weiter vorne in der Reihenfolge anzeigt, um so ein Objekt weiter hinten in der Reihenfolge zu verbergen, wenn das weiter vorne befindliche Objekt in einer die weiter hinten befindlichen Objekte überlappenden Weise angezeigt wird;
eine Positionsspezifikationseingabe-Empfangseinheit (308), die eine Positionsspezifikationseingabe zur Spezifizierung einer Position auf dem Bildschirm empfängt; und
eine Ausgabeeinheit (307), die unter auf dem Bildschirm angezeigten Objekten (a) als ein Auswahlergebnis ein bestimmtes Objekt in der Reihenfolge der Objekte ausgibt, die an einer Position angezeigt werden, falls ein Objekt vorhanden ist, das an der durch die Positionsspezifikationseingabe spezifizierten Position angezeigt wird, und (b) als ein Auswahlergebnis ein bestimmtes Objekt in der Reihenfolge der Objekte ausgibt, die an einer Position angezeigt werden, die einen zweidimensionalen Bereich überlappt, der derart festgelegt ist, dass er die Position enthält, falls kein Objekt vorhanden ist, das an einer durch die Positionsspezifikationseingabe spezifizierten Position angezeigt wird, jedoch ein Objekt vorhanden ist, das an der überlappenden Position angezeigt wird; und

**dadurch gekennzeichnet, dass:**

das bestimmte Objekt als das Auswahlergebnis (a) bzw. (b) ein am weitesten vorne in der Reihenfolge der Objekte befindliches Objekt ist, die an der spezifizierten Position bzw. an der Position angezeigt werden, die den zweidimensionalen Bereich überlappt, der derart festgelegt ist, dass er die Position enthält;

wobei jedes der Objekte in einem virtuellen Raum angeordnet ist;

wobei ein Objekt weiter vorne in der Reihenfolge sich näher an einem Sichtpunkt, der in dem virtuellen Raum angeordnet ist, befindet als ein Objekt weiter hinten in der Reihenfolge;

wobei die Ausgabeeinheit (307) eine Richtung eines Strahls, der in dem virtuellen Raum angeordnet ist und sich von dem Sichtpunkt aus erstreckt, auf der Basis einer durch die Positionsspezifikationseingabe spezifizierten Position bestimmt;

wobei die Ausgabeeinheit (307) unter in dem virtuellen Raum angeordneten Objekten (a) als ein Auswahlergebnis unter Objekten, die den Strahl schneiden, ein am nächsten an dem Sichtpunkt befindliches Objekt ausgibt, falls ein Objekt vorhanden ist, das den Strahl schneidet, und (b) als ein Auswahlergebnis unter Objekten, die einen dreidimensionalen Bereich schneiden, ein am nächsten an dem Sichtpunkt befindliches Objekt ausgibt, falls kein Objekt vorhanden ist, das den Strahl schneidet, jedoch ein Objekt vorhanden ist, das einen dreidimensionalen Bereich schneidet, der derart festgelegt ist, dass er den Strahl in dem virtuellen Raum enthält, und dessen zugehöriger Bereich auf dem Bildschirm ein zweidimensionaler Bereich ist;

wobei der dreidimensionale Bereich ein konischer/pyramidenförmiger Körper ist, der den Sichtpunkt als eine Spitze aufweist, der den Strahl aufweist und dessen Position im Bezug auf den Strahl fest ist;

wobei die Anzeigeeinheit (306) auf dem Bildschirm ein Bild anzeigt, in dem der Strahl und der konische/pyramidenförmige Körper von dem Sichtpunkt aus zu sehen sind; und

wobei ein Bereich, in dem der konische/pyramidenförmige Körper in dem Bild angezeigt wird, der zweidimensionale Bereich ist.

2. Objektauswahleinrichtung (301) nach Anspruch 1, die ferner aufweist:

eine Bereichsrangspeichereinheit, die in Verbindung miteinander Objekte, die in dem virtuellen Raum angeordnet sind, einen Bereich innerhalb des Bildschirms, auf dem das Objekt angezeigt wird, und einen Rang der Nähe zwischen dem Objekt und dem Sichtpunkt speichert, wobei:

die Ausgabeeinheit (307) unter Objekten, die in dem virtuellen Raum angeordnet sind, (a) als eine Auswahlergebnis ein Objekt ausgibt, das in der Bereichsrangspeichereinheit in Verbindung mit einem Bereich gespeichert ist, der eine Position enthält, an der der Strahl auf dem Bildschirm angezeigt wird, falls ein Bereich, der eine Position enthält, an der der Strahl auf dem Bildschirm angezeigt wird, in der Bereichsrangspeichereinheit gespeichert ist, und (b) als ein Auswahlergebnis von Objekten, die in der Bereichsrangspeichereinheit in Verbindung mit einem Bereich gespeichert sind, der einen Bereich schneidet, in dem der konische/pyramidenförmige Körper auf dem Bildschirm angezeigt wird, ein Objekt ausgibt, das als dasjenige gespeichert ist, dessen Rang der Nähe von dem Objekt zum Sichtpunkt am nächsten entspricht, falls kein Bereich, der eine Position enthält, an der der Strahl auf dem Bildschirm angezeigt wird, in der Bereichsrangspeichereinheit gespeichert ist, jedoch ein Bereich, der sich mit einem Bereich schneidet, in dem der konische/pyramidenförmige Körper auf dem Bildschirm angezeigt wird, in der Bereichsrangspeichereinheit gespeichert ist.

3. Objektauswahleinrichtung (301) nach Anspruch 2, wobei:

die Bereichsrangspeichereinheit ein Bildpuffer ist; und

ein Objekt in Verbindung mit einem Bereich, in dem das Objekt auf dem Bildschirm angezeigt wird, und einem Rang der Nähe zwischen dem Objekt und dem Sichtpunkt gespeichert wird, wenn die Anzeigeeinheit (306) Objekte, die in dem virtuellen Raum angeordnet sind, unter Verwendung eines Rangs der Nähe zwischen dem Objekt und dem Sichtpunkt als ein Pixelwert in der Reihenfolge des Abstands von dem Sichtpunkt in den Bildpuffer einzeichnet.

**4.** Objektauswahleinrichtung (301) nach Anspruch 1, wobei:

die Ausgabeeinheit (307) einen Schnitt des Objektes mit dem Strahl oder einen Schnitt des Objektes mit dem konischen/pyramidenförmigen Körper auf der Basis eines Winkels bewertet, der durch einen Richtungsvektor des Strahls und einen Positionsvektor des Objektes in Bezug auf den Sichtpunkt gebildet ist.

**5.** Objektauswahleinrichtung (301) nach Anspruch 1, wobei:

die Positionsspezifikationseingabe-Empfangseinheit (308) eine Richtungsspezifikationseingabe-Empfangseinheit (308) aufweist, die eine Eingabe der Richtungsspezifikationseingabe zur Spezifizierung einer Richtung des Strahls in dem virtuellen Raum empfängt; und ferner aufweisend:

eine Richtungsänderungseinheit (309), die eine Richtung des konischen/pyramidenförmigen Körpers verändert, indem sie eine Richtung des Strahls in eine durch die empfangene Richtungsspezifikationseingabe spezifizierte Richtung verändert, wobei die Ausgabeeinheit (307) eine durch die Richtungsänderungseinheit (309) veränderte Richtung als eine Richtung eines Strahls verwendet, der in dem virtuellen Raum angeordnet wird und sich von dem Sichtpunkt aus erstreckt.

**6.** Objektauswahleinrichtung (301) nach Anspruch 1, wobei:

ein Objekt, das durch die Ausgabeeinheit (307) als ein Auswahlergebnis ausgegeben wird, einen Abstand von dem Sichtpunkt aufweist, der kleiner als oder gleich einem vorbestimmten Schwellenwert ist.

**7.** Objektauswahlverfahren, das aufweist:

einen Anzeigeschritt zum Anzeigen von Objekten, die in einer vorbestimmten Reihenfolge geordnet sind, auf einem Bildschirm, wobei ein Objekt weiter vorne in der Reihenfolge derart angezeigt wird, dass es ein Objekt weiter hinten in der Reihenfolge verbirgt, wenn das Objekt weiter vorne in einer die Objekte weiter hinten überlappenden Weise angezeigt wird; einen Positionsspezifikationseingabe-Epfangsschritt zum Empfangen einer Positionsspezifikationseingabe zur Spezifizierung einer Position auf dem Bildschirm; und

einen Ausgabeschritt, um, unter auf dem Bildschirm angezeigten Objekten, (a) als ein Auswahlergebnis ein bestimmtes Objekt in der Reihenfolge der Objekte auszugeben, die an einer Position angezeigt werden, falls ein Objekt vorhanden ist, das an der durch die Positionsspezifikationseingabe spezifizierten Position angezeigt wird, und (b) als ein Auswahlergebnis ein bestimmtes Objekt in der Reihenfolge der Objekte auszugeben, die an einer Position angezeigt werden, die einen zweidimensionalen Bereich überlappt, der derart festgelegt ist, dass er die Position enthält, falls kein Objekt vorhanden ist, das an einer durch die Positionsspezifikationseingabe spezifizierten Position angezeigt wird, jedoch ein Objekt vorhanden ist, das an der überlappenden Position angezeigt wird; und

**dadurch gekennzeichnet, dass:**

das bestimmte Objekt als das Auswahlergebnis (a) bzw. (b) ein Objekt am weitesten vorne in der Reihenfolge der Objekte ist, die an der spezifizierten Position bzw. an der Position angezeigt werden, die den zweidimensionalen Bereich überlappt, der derart festgelegt ist, dass er die Position enthält;
wobei jedes der Objekte in einem virtuellen Raum angeordnet ist;
wobei ein Objekt weiter vorne in der Reihenfolge sich näher an einem in dem virtuellen Raum angeordneten Sichtpunkt befindet als ein Objekt weiter hinten in der Reihenfolge;
wobei in dem Ausgabeschritt eine Richtung eines Strahls, der in dem virtuellen Raum angeordnet ist und sich von dem Sichtpunkt aus erstreckt, auf der Basis einer durch die Positionsspezifikationseingabe spezifizierten Position bestimmt wird;
wobei in dem Ausgabeschritt unter Objekten, die in dem virtuellen Raum angeordnet sind, (a) als ein Auswahlergebnis unter Objekten, die den Strahl schneiden, ein Objekt ausgegeben wird, das sich am nächsten an dem Sichtpunkt befindet, falls ein Objekt vorhanden ist, das den Strahl schneidet, und (b) als ein Auswahlergebnis unter Objekten, die einen dreidimensionalen Bereich schneiden, ein Objekt ausgegeben wird, das sich am nächsten an dem Sichtpunkt befindet, falls kein Objekt vorhanden ist, das den Strahl schneidet, jedoch ein Objekt vorhanden ist, das einen dreidimensionalen Bereich schneidet, der derart festgelegt ist, dass er den Strahl in dem virtuellen Bereich enthält, und dessen zugehöriger Bereich auf dem Bildschirm ein zweidimensionaler Bereich ist;
wobei der dreidimensionale Bereich ein konischer/pyramidenförmiger Körper ist, der den Sichtpunkt als eine Spitze aufweist, der den Strahl enthält und dessen Position in Bezug auf den Strahl fest ist;

wobei die Anzeigeeinheit (306) auf dem Bildschirm ein Bild anzeigt, in dem der Strahl und der konische/pyramidenförmige Körper von dem Sichtpunkt aus gesehen werden; und

wobei ein Bereich, in dem der konische/pyramidenförmige Körper in dem Bild angezeigt wird, der zweidimensionale Bereich ist.

8.  Computerlesbares Informationsaufzeichnungsmedium, das ein Programm zur Steuerung eines Computers speichert, damit dieser funktioniert als:

eine Anzeigeeinheit (306), die in einer vorbestimmten Reihenfolge geordnete Objekte auf einem Bildschirm anzeigt, wobei die Anzeigeeinheit (306) ein Objekt weiter vorne in der Reihenfolge derart anzeigt, dass es ein Objekt weiter hinten in der Reihenfolge verbirgt, wenn das Objekt weiter vorne in einer das Objekt weiter hinten überlappenden Weise angezeigt wird;

eine Positionsspezifikationseingabe-Empfangseinheit (308), die eine Positionsspezifikationseingabe zur Spezifizierung einer Position auf dem Bildschirm empfängt; und

eine Ausgabeeinheit (307), die unter Objekten, die auf dem Bildschirm angezeigt werden, (a) als ein Auswahlergebnis ein bestimmtes Objekt in der Reihenfolge der Objekte ausgibt, die an einer Position angezeigt werden, falls ein Objekt vorhanden ist, das an der durch die Positionsspezifikationseingabe spezifizierten Position angezeigt wird, und (b) als ein Auswahlergebnis ein bestimmtes Objekt in der Reihenfolge der Objekte ausgibt, die an einer überlappenden Position angezeigt werden, falls kein Objekt vorhanden ist, das an einer durch die Positionsspezifikationseingabe spezifizierten Position angezeigt wird, jedoch ein Objekt vorhanden ist, das an einer Position angezeigt wird, die einen zweidimensionalen Bereich überlappt, der derart festgelegt ist, dass er die Position enthält;

**dadurch gekennzeichnet, dass:**

das bestimmte Objekt als das Auswahlergebnis (a) bzw. (b) ein Objekt am weitesten vorne in der Reihenfolge der Objekte ist, die an der spezifizierten Position bzw. an der Position angezeigt werden, die den zweidimensionalen Bereich überlappt, der derart festgelegt ist, dass er die Position enthält;

wobei jedes der Objekte in einem virtuellen Raum angeordnet ist;

wobei ein Objekt weiter vorne in der Reihenfolge sich näher an einem in dem virtuellen Raum angeordneten Sichtpunkt befindet als ein Objekt weiter hinten in der Reihenfolge;

wobei die Ausgabeeinheit (307) eine Richtung eines Strahls, der in dem virtuellen Raum angeordnet ist und sich von dem Sichtpunkt aus erstreckt, auf der Basis einer durch die Positionsspezifikationseingabe spezifizierten Position bestimmt;

wobei die Ausgabeeinheit (307) unter in dem virtuellen Raum anzuordnenden Objekten (a) als ein Auswahlergebnis ein Objekt, das dem Sichtpunkt am nächsten ist, unter Objekten, die den Strahl schneiden, ausgibt, falls ein Objekt vorhanden ist, das den Strahl schneidet, und (b) als ein Auswahlergebnis ein Objekt, das dem Sichtpunkt am nächsten ist, unter Objekten, die einen dreidimensionalen Bereich schneiden, ausgibt, falls kein Objekt vorhanden ist, das den Strahl schneidet, jedoch ein Objekt vorhanden ist, das einen dreidimensionalen Bereich schneidet, der derart festgelegt ist, dass er den Stahl in dem virtuellen Raum enthält, und dessen zugehöriger Bereich auf dem Bildschirm ein zweidimensionaler Bereich ist;

wobei der dreidimensionale Bereich ein konischer/pyramidenförmiger Körper ist, der den Sichtpunkt als eine Spitze aufweist, der den Strahl enthält und dessen Position in Bezug auf Strahl fest ist;

wobei die Anzeigeeinheit (306) auf dem Bildschirm ein Bild anzeigt, in dem der Strahl und der konische/pyramidenförmige Körper von dem Sichtpunkt aus gesehen werden; und

wobei ein Bereich, in dem der konische/pyramidenförmige Körper in dem Bild angezeigt wird, der zweidimensionale Bereich ist.

9.  Programm zur Steuerung eines Computers, damit dieser funktioniert als :

eine Anzeigeeinheit (306), die in einer vorbestimmten Reihenfolge geordnete Objekte auf einem Bildschirm anzeigt, wobei die Anzeigeeinheit (306) ein Objekt weiter vorne in der Reihenfolge derart anzeigt, dass es ein Objekt weiter hinten in der Reihenfolge verbirgt, wenn das Objekt weiter vorne in einer das Objekt weiter hinten überlappenden Weise angezeigt wird;

eine Positionsspezifikationseingabe-Empfangseinheit (308), die eine Positionsspezifikationseingabe zur Spezifizierung einer Position auf dem Bildschirm empfängt; und

eine Ausgabeeinheit (307), die unter Objekten, die auf dem Bildschirm angezeigt werden, (a) als ein Auswahlergebnis ein bestimmtes Objekt in der Reihenfolge der Objekte ausgibt, die an einer Position angezeigt werden, falls ein Objekt vorhanden ist, das an der durch die Positionsspezifikationseingabe spezifizierten Position angezeigt wird, und (b) als ein Auswahlergebnis ein bestimmtes Objekt in der Reihenfolge der Objekte ausgibt, die an einer überlappenden Position angezeigt werden, falls kein Objekt vorhanden ist, das an einer durch die Positionsspezifikationseingabe spezifizierten Position angezeigt wird, jedoch ein Objekt vorhanden ist, das an einer Position angezeigt wird, die einen zweidimensionalen Bereich überlappt, der derart festgelegt ist, dass er die Position enthält;

**dadurch gekennzeichnet, dass:**

das bestimmte Objekt als das Auswahlergebnis (a) bzw. (b) ein Objekt am weitesten vorne in der Reihenfolge der Objekte ist, die an der spezifizierten Position bzw. an der Position angezeigt werden, die den zweidimensionalen Bereich überlappt, der derart festgelegt ist, dass er die Position enthält;
wobei jedes der Objekte in einem virtuellen Raum angeordnet ist;
wobei ein Objekt weiter vorne in der Reihenfolge sich näher an einem in dem virtuellen Raum angeordneten Sichtpunkt befindet als ein Objekt weiter hinten in der Reihenfolge;
wobei die Ausgabeeinheit (307) eine Richtung eines Strahls, der in dem virtuellen Raum angeordnet ist und sich von dem Sichtpunkt aus erstreckt, auf der Basis einer durch die Positionsspezifikationseingabe spezifizierten Position bestimmt;
wobei die Ausgabeeinheit (307) unter in dem virtuellen Raum anzuordnenden Objekten (a) als ein Auswahlergebnis ein Objekt, das dem Sichtpunkt am nächsten ist, unter Objekten, die den Strahl schneiden, ausgibt, falls ein Objekt vorhanden ist, das den Strahl schneidet, und (b) als ein Auswahlergebnis ein Objekt, das dem Sichtpunkt am nächsten ist, unter Objekten, die einen dreidimensionalen Bereich schneiden, ausgibt, falls kein Objekt vorhanden ist, das den Strahl schneidet, jedoch ein Objekt vorhanden ist, das einen dreidimensionalen Bereich schneidet, der derart festgelegt ist, dass er den Stahl in dem virtuellen Raum enthält, und dessen zugehöriger Bereich auf dem Bildschirm ein zweidimensionaler Bereich ist;
wobei der dreidimensionale Bereich ein konischer/pyramidenförmiger Körper ist, der den Sichtpunkt als eine Spitze aufweist, der den Strahl enthält und dessen Position in Bezug auf Strahl fest ist;
wobei die Anzeigeeinheit (306) auf dem Bildschirm ein Bild anzeigt, in dem der Strahl und der konische/pyramidenförmige Körper von dem Sichtpunkt aus gesehen werden; und

wobei ein Bereich, in dem der konische/pyramidenförmige Körper in dem Bild angezeigt wird, der zweidimensionale Bereich ist.

## Revendications

1. Dispositif de sélection d'objet (301), comprenant:

une unité d'affichage (306) qui affiche des objets ordonnés dans un ordre prédéterminé sur un écran, ladite unité d'affichage (306) affichant un objet situé plus en avant dans l'ordre de façon à cacher un objet situé plus en arrière dans l'ordre lorsque l'objet situé plus en avant est affiché chevauchant les objets situés plus en arrière;
une unité de réception d'entrée spécifiant une position (308) qui reçoit une entrée spécifiant une position pour spécifier une position sur l'écran; et
une unité de sortie (307) qui délivre, parmi les objets affichés sur l'écran, (a) en tant que résultat de sélection, un objet particulier dans l'ordre des objets affichés à une position, s'il existe un objet affiché à la position spécifiée par ladite entrée spécifiant une position, et (b) en tant que résultat de sélection, un objet particulier dans l'ordre des objets affichés à une position chevauchant une zone bidimensionnelle placée de façon à inclure la position, s'il n'existe aucun objet affiché à une position spécifiée par l'entrée spécifiant une position mais il existe un objet affiché à la position de chevauchement; et

**caractérisé en ce que:**

l'objet particulier en tant que résultat de sélection (a) ou (b), respectivement, est un objet situé le plus en avant dans l'ordre des objets affichés à la position spécifiée ou à la position chevauchant la zone bidimensionnelle placée de façon à inclure la position, respectivement;
chacun des objets est disposé dans un espace virtuel;
un objet situé plus en avant dans l'ordre est plus proche d'un point de vue disposé dans l'espace virtuel qu'un objet situé plus en arrière dans l'ordre;
ladite unité de sortie (307) détermine une direction d'un rayon disposé dans l'espace virtuel et partant dudit point de vue, sur la base d'une position spécifiée par ladite entrée spécifiant une position;
ladite unité de sortie (307) délivre, parmi les objets disposés dans l'espace virtuel, (a) en tant que résultat de sélection, un objet le plus proche du point de vue parmi les objets coupant le rayon, s'il existe un objet qui coupe ledit rayon, et (b) en tant que résultat de sélection, un objet le plus proche du point de vue parmi les objets coupant une zone tridimensionnelle, s'il n'existe aucun objet qui coupe le rayon mais il existe un objet qui coupe une zone tridimensionnelle qui est placée de façon à inclure le rayon dans l'espace virtuel, et dont la zone correspondante sur l'écran est une zone bidimensionnelle; la zone tridimensionnelle est un corps conique/pyramidal ayant le point de vue comme sommet, qui inclut le rayon, et dont la position par rapport au rayon est fixe; ladite unité d'affichage (306) affiche sur l'écran une image dans laquelle le rayon et le corps conique/pyramidal sont vus depuis le point de vue; et une zone dans laquelle le corps conique/pyramidal est affiché dans l'image est la zone bidimensionnelle.

2. Dispositif de sélection d'objet (301) selon la revendication 1, comprenant en outre:

une unité de stockage de région et rang qui stocke, en association l'un avec l'autre, des objets disposés dans l'espace virtuel, une région dans l'écran sur laquelle l'objet est affiché, et un rang de proximité de l'objet et du point de vue, dans lequel:

ladite unité de sortie (307) délivre, parmi les objets disposés dans l'espace virtuel, (a) en tant que résultat de sélection, un objet stocké dans ladite unité de stockage de région et rang en association avec une zone incluant une position à laquelle le rayon est affiché sur l'écran, si une région incluant une position à laquelle le rayon est affiché sur l'écran est stockée dans ladite unité de stockage de région et rang, et (b) en tant que résultat de sélection, un objet stocké dont le rang de proximité de l'objet au point de vue est le plus proche, parmi les objets stockés dans ladite unité de stockage de région et rang en association avec une région coupant une région dans laquelle le corps conique/pyramidal est affiché sur l'écran, si aucune région incluant une position à laquelle le rayon est affiché dans l'écran n'est stockée dans ladite unité de stockage de région et rang mais une région coupant une région dans laquelle le corps conique/pyramidal est affiché sur l'écran est stockée dans ladite unité de stockage de région et rang.

3. Dispositif de sélection d'objet (301) selon la revendication 2, dans lequel:

ladite unité de stockage de région et rang est un tampon d'image; et un objet est stocké en association avec une région dans laquelle l'objet est affiché sur l'écran et un rang de proximité de l'objet et du point de vue, lorsque ladite unité d'affichage (306) trace des objets disposés dans l'espace virtuel dans le tampon d'image en utilisant un rang de proximité de l'objet et du point de vue comme valeur de pixel, par ordre de distance par rapport au point de vue.

4. Dispositif de sélection d'objet (301) selon la revendication 1, dans lequel:

ladite unité de sortie (307) détermine une intersection de l'objet avec le rayon ou une intersection de l'objet avec le corps conique/pyramidal sur la base d'un angle formé par un vecteur directeur du rayon et un vecteur de position de l'objet par rapport au point de vue.

5. Dispositif de sélection d'objet (301) selon la revendication 1, dans lequel:

ladite unité de réception d'entrée spécifiant une position (308) comprend une unité de réception d'entrée spécifiant une direction (308) qui reçoit une entrée spécifiant une direction pour spécifier une direction du rayon dans l'espace virtuel; et comprenant en outre:

une unité de changement de direction (309) qui change une direction du corps conique/pyramidal, par changement d'une direction du rayon, pour une direction spécifiée par l'entrée spécifiant une direction reçue, et dans lequel:

ladite unité de sortie (307) utilise une direction changée par ladite unité de changement de direction (309) comme direction d'un rayon disposé dans l'espace virtuel et partant du point de vue.

6. Dispositif de sélection d'objet (301) selon la revendication 1, dans lequel:

un objet délivré par ladite unité de sortie (307) en tant que résultat de sélection a une distance par rapport au point de vue inférieure ou égale à un seuil prédéterminé.

7. Procédé de sélection d'objet, comprenant:

une étape d'affichage consistant à afficher des objets ordonnés dans un ordre prédéterminé sur un écran, et afficher un objet situé plus en avant dans l'ordre de façon à cacher un objet situé plus en arrière dans l'ordre lorsque l'objet situé plus en avant est affiché chevauchant les objets situés plus en arrière;

une étape de réception d'entrée spécifiant une position consistant à recevoir une entrée spécifiant une position pour spécifier une position sur l'écran; et

une étape de sortie consistant à délivrer, parmi les objets affichés sur l'écran, (a) en tant que résultat de sélection, un objet particulier dans l'ordre des objets affichés à une position, s'il existe un objet affiché à la position spécifiée par l'entrée spécifiant une position, et (b) en tant que résultat de sélection, un objet particulier dans l'ordre des objets affichés à une position chevauchant une zone bidimensionnelle placée de façon à inclure la position, s'il n'existe aucun objet affiché à une position spécifiée par l'entrée spécifiant une position mais il existe un objet affiché à la position de chevauchement; et

**caractérisé en ce que:**

l'objet particulier en tant que résultat de sélection (a) ou (b), respectivement, est un objet situé le plus en avant dans l'ordre des objets affichés à la position spécifiée ou à la position chevauchant la zone bidimensionnelle placée de façon à inclure la position, respectivement;

chacun des objets est disposé dans un espace virtuel;

un objet situé plus en avant dans l'ordre est plus proche d'un point de vue disposé dans l'espace virtuel qu'un objet situé plus en arrière dans l'ordre;

à ladite étape de sortie, une direction d'un rayon disposé dans l'espace virtuel et partant dudit point de vue est déterminée, sur la base d'une position spécifiée par ladite entrée spécifiant une position;

à ladite étape de sortie, parmi les objets disposés dans l'espace virtuel, (a) en tant que résultat de sélection, un objet le plus proche du point de vue parmi les objets coupant le rayon est délivré, s'il existe un objet qui coupe ledit rayon, et (b) en tant que résultat de sélection, un objet le plus proche du point de vue parmi les objets coupant une zone tridimensionnelle est délivré, s'il n'existe aucun objet qui coupe le rayon mais il existe un objet qui coupe une zone tridimensionnelle qui est placée de façon à inclure le rayon dans l'espace virtuel, et dont la zone correspondante sur l'écran est une zone bidimensionnelle;

la zone tridimensionnelle est un corps conique/pyramidal ayant le point de vue comme sommet, qui inclut le rayon, et dont la position par rapport au rayon est fixe;

ladite étape d'affichage affiche sur l'écran une image dans laquelle le rayon et le corps conique/pyramidal sont vus depuis le point de vue; et une zone dans laquelle le corps conique/pyramidal est affiché dans l'image est la zone bidimensionnelle.

8. Support d'enregistrement d'informations lisible par ordinateur stockant un programme servant à commander un ordinateur pour fonctionner comme:

une unité d'affichage (306) qui affiche des objets ordonnés dans un ordre prédéterminé sur un écran, ladite unité d'affichage (306) affichant un objet situé plus en avant dans l'ordre de façon à cacher un objet situé plus en arrière dans l'ordre lorsque l'objet situé plus en avant est affiché chevauchant l'objet situé plus en arrière;

une unité de réception d'entrée spécifiant une position (308) qui reçoit une entrée spécifiant une position pour spécifier une position sur l'écran; et

une unité de sortie (307) qui délivre, parmi les objets affichés sur l'écran, (a) en tant que résultat de sélection, un objet particulier dans l'ordre des objets affichés à une position, s'il existe un objet affiché à la position spécifiée par l'entrée spécifiant une position, et (b) en tant que résultat de sélection, un objet particulier dans l'ordre des objets affichés à une position de chevauchement, s'il n'existe aucun objet affiché à une position spécifiée par l'entrée spécifiant une position mais il existe un objet affiché à une position chevauchant une zone bidimensionnelle placée de façon à inclure la position; et

**caractérisé en ce que:**

l'objet particulier en tant que résultat de sélection (a) ou (b), respectivement, est un objet situé le plus en avant dans l'ordre des objets affichés à la position spécifiée ou à la position chevauchant la zone bidimensionnelle placée de façon à inclure la position, respectivement;

chacun des objets est disposé dans un espace virtuel;

un objet situé plus en avant dans l'ordre est plus proche d'un point de vue disposé dans l'espace virtuel qu'un objet situé plus en arrière dans l'ordre;

ladite unité de sortie (307) détermine une direction d'un rayon disposé dans l'espace virtuel et partant dudit point de vue, sur la base d'une position spécifiée par ladite entrée spécifiant une position;

ladite unité de sortie (307) délivre, parmi les objets disposés dans l'espace virtuel, (a) en tant que résultat de sélection, un objet le plus proche du point de vue parmi les objets coupant le rayon, s'il existe un objet qui coupe ledit rayon, et (b) en tant que résultat de sélection, un objet le plus proche du point de vue parmi les objets coupant une zone tridimensionnelle, s'il n'existe aucun objet qui coupe le rayon mais il existe un objet qui coupe une zone tridimensionnelle qui est placée de façon à inclure le rayon dans l'espace virtuel, et dont la zone correspondante sur l'écran est une zone bidimensionnelle;

la zone tridimensionnelle est un corps conique/pyramidal ayant le point de vue comme sommet, qui inclut le rayon, et dont la position par rapport au rayon est fixe;

ladite unité d'affichage (306) affiche sur l'écran une image dans laquelle le rayon et le corps conique/pyramidal sont vus depuis le point de vue; et

une zone dans laquelle le corps conique/pyramidal est affiché dans l'image est la zone bidimensionnelle.

9. Programme servant à commander un ordinateur pour fonctionner comme:

une unité d'affichage (306) qui affiche des objets ordonnés dans un ordre prédéterminé sur un écran, ladite unité d'affichage (306) affichant un objet situé plus en avant dans l'ordre de façon à cacher un objet situé plus en arrière dans l'ordre lorsque l'objet situé plus en avant est affiché chevauchant l'objet situé plus en arrière;

une unité de réception d'entrée spécifiant une position (308) qui reçoit une entrée spécifiant une position pour spécifier une position sur l'écran; et

une unité de sortie (307) qui délivre, parmi les objets affichés sur ledit écran, (a) en tant que résultat de sélection, un objet particulier dans l'ordre des objets affichés à une position, s'il existe un objet affiché à la position spécifiée par l'entrée spécifiant une position, et (b) en tant que résultat de sélection, un objet particulier dans l'ordre des objets affichés à une position de chevauchement, s'il n'existe aucun objet affiché à une position spécifiée par l'entrée spécifiant une position mais il existe un objet affiché à une position chevauchant une zone bidimensionnelle placée de façon à inclure la position; et

**caractérisé en ce que:**

l'objet particulier en tant que résultat de sélection (a) ou (b), respectivement, est un objet situé le plus en avant dans l'ordre des objets affichés à la position spécifiée ou à la position chevauchant la zone bidimensionnelle placée de façon à inclure la position, respectivement;

chacun des objets est disposé dans un espace virtuel;

un objet situé plus en avant dans l'ordre est plus proche d'un point de vue disposé dans l'espace virtuel qu'un objet situé plus en arrière dans l'ordre;

ladite unité de sortie (307) détermine une direction d'un rayon disposé dans l'espace virtuel et partant dudit point de vue, sur la base d'une position spécifiée par ladite entrée spécifiant une position;

ladite unité de sortie (307) délivre, parmi les objets disposés dans l'espace virtuel, (a) en tant que résultat de sélection, un objet le plus proche du point de vue parmi les objets coupant le rayon, s'il existe un objet qui coupe ledit rayon, et (b) en tant que résultat de sélection, un objet le plus proche du point de vue parmi les objets coupant une zone tridimensionnelle, s'il n'existe aucun objet qui coupe le rayon mais il existe un objet qui coupe une zone tridimensionnelle qui est placée de façon à inclure le rayon dans l'espace virtuel, et dont la zone correspondante sur l'écran est une zone bidimensionnelle;

la zone tridimensionnelle est un corps conique/pyramidal ayant le point de vue comme sommet, qui inclut le rayon, et dont la position par rapport au rayon est fixe;

ladite unité d'affichage (306) affiche sur l'écran une image dans laquelle le rayon et le corps conique/pyramidal sont vus depuis le point de vue; et

une zone dans laquelle le corps conique/pyramidal est affiché dans l'image est la zone bidimensionnelle.

# FIG.1

TO MONITOR

101  102  103

| CPU | ROM | RAM | IMAGE PROCESSOR |

107

109

NIC ← → TO INTERNET

104 — INTERFACE

108 — DVD-ROM DRIVE

SOUND PROCESSOR — 110

105

EXTERNAL MEMORY — 106

111

100

TO SPEAKERS, HEADPHONES, EARPHONES, ETC.

EP 1 956 471 B1

# FIG.2

# FIG.3

301

308

DIRECTION
SPECIFYING
INPUT

DIRECTION
SPECIFYING INPUT
RECEIVING UNIT

302

OBJECT
STORAGE
UNIT

DIRECTION
CHANGING UNIT

309

303

Z BUFFER

304

306

FRAME
BUFFER

DISPLAY
UNIT

305

IMAGE
BUFFER

310

DESIGNATION
SPECIFYING INPUT
RECEIVING UNIT

DESIGNATION
SPECIFYING
INPUT

311

DESIGNATING
UNIT

SELECTION
RESULT

307

OUTPUT UNIT

# FIG.4

401

402

404

403

408

406

407

405

VIEWPOINT

# FIG.5

```
          ( START )                                    ┌──────────────────┐
              │                                        │  FIND DRAWING    │~S512
              ▼                                        │  POSITION OF RAY │
    ┌──────────────────┐                               └──────────────────┘
    │    INITIALIZE    │~S501                                   │
    └──────────────────┘                                        ▼
              │                                        ┌──────────────────┐
              ▼                                        │ TEMPORARY PIXEL  │
    ┌──────────────────┐                               │  VALUE AREA ←    │~S513
    │ REGISTER TO Z BUFFER │~S502                      │ BACKGROUND COLOR │
    └──────────────────┘                               └──────────────────┘
              │                                                 │
              ▼                                                 ▼
    ┌──────────────────┐                               ┌──────────────────┐
    │   SORT Z BUFFER  │~S503                          │   REPEAT FOR     │~S514
    └──────────────────┘                               │ PIXELS INSIDE AREA │
              │                                         └──────────────────┘
              ▼                                                 │
    ┌──────────────────┐                                        ▼
    │ CLEAR FRAME BUFFER │~S504                              ◇ IS
    └──────────────────┘                                     PIXEL         S515
              │                                            VALUE LESS      ──── NO
              ▼                                           THAN TEMPORARY
    ┌──────────────────┐                                   PIXEL VALUE
    │ DRAW GENERAL OBJECTS │~S505                              AREA
    │   TO FRAME BUFFER    │                                     ?
    └──────────────────┘                                      │ YES
              │                                                 ▼
              ▼                                        ┌──────────────────┐
    ┌──────────────────┐                               │ TEMPORARY PIXEL  │
    │ DRAW RAY AND CONE │~S506                         │  VALUE AREA      │~S516
    │   TO FRAME BUFFER │                               │  ← PIXEL VALUE   │
    └──────────────────┘                               └──────────────────┘
              │                                                 │
              ▼                                                 ▼
    ┌──────────────────┐                                   ( REPEAT )     ~S517
    │ CLEAR IMAGE BUFFER │~S507                                  │
    └──────────────────┘                                        ▼
              │                                               ◇ IS         S518
              ▼                                            TEMPORARY
    ┌──────────────────┐                                  PIXEL VALUE AREA ── NO
    │ DRAW GENERAL OBJECTS │                               THE BACKGROUND
    │   TO IMAGE BUFFER    │~S508                              COLOR
    │ USING PIXEL VALUES IN │                                    ?
    │ ORDER OF CLOSENESS   │                                   │ YES
    └──────────────────┘                                        ▼
              │                                        ┌──────────────────┐
              ▼                                        │ SELECTION RESULT │~S519
    ┌──────────────────┐                               │   AREA ← 0       │
    │   FIND DRAWING   │~S509                           └──────────────────┘
    │ POSITION OF RAY  │                                         │
    └──────────────────┘                                         ▼          S520
              │                                               ◇ CONTROLLER?
              ▼              S510
           ◇ IS
          PIXEL VALUE
       AT THAT POSITION A ──── YES
        BACKGROUND
          COLOR ?
              │ NO
              ▼
    ┌──────────────────┐
    │ TEMPORARY PIXEL  │
    │ VALUE AREA ← Z BUFFER │~S511
    │   [PIXEL VALUE]  │
    └──────────────────┘
```

ARROWS · OTHER · CIRCLE

S521~ MOVE RAY OBJECT, ETC. · CORRESPONDING PROCESS · ( END )

S523~ STANDBY · S522

# FIG.6

601

408

407 404

602

403

# FIG.7

305

255

0

2

1

FIG.8A

FIG.8E

FIG.8B

FIG.8F

FIG.8C

FIG.8G

FIG.8D

FIG.8H

**EP 1 956 471 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3497860 B
- EP 0738952 A2
- US 6384841 B1